# EUROPÄISCHE PATENTSCHRIFT

(11) **EP 4 434 717 B1**
(45) Veröffentlichungstag und Bekanntmachung des Hinweises auf die Patenterteilung: **30.04.2025**
(21) Anmeldenummer: 23163995.6
(22) Anmeldetag: 24.03.2023
(51) Int. Cl.: B29C 48/90, B29C 48/00, B29C 48/12, B29C 48/345

(54) **KALIBRIERVORRICHTUNG UND VERFAHREN ZUM KALIBRIEREN EINES EXTRUDIERTEN KUNSTSTOFFPROFILSTRANGS**
CALIBRATION DEVICE AND METHOD FOR CALIBRATING AN EXTRUDED PLASTIC PROFILE STRAND
DISPOSITIF DE CALIBRAGE ET PROCÉDÉ DE CALIBRAGE D'UN PROFILÉ EXTRUDÉ EN MATIÈRE PLASTIQUE

(43) Veröffentlichungstag der Anmeldung: 25.09.2024
(73) Patentinhaber: Technoform Bautec Holding GmbH, 34253 Lohfelden (DE)
(72) Erfinder: MORLANS, Meritxell, 34253 Lohfelden (DE); ROSENAU, Günther, 34253 Lohfelden (DE); YOUSSEF, Samir, 34253 Lohfelden (DE)
(74) Vertreter: Kramer Barske Schmidtchen Patentanwälte PartG mbB

(56) Entgegenhaltungen:
- EP-A1- 0 657 612
- EP-A2- 2 586 638
- WO-A2-2004/037516
- DE-A1- 102018 132 434
- DE-A1- 19 921 458

## Beschreibung

Die Erfindung bezieht sich auf eine Kalibriervorrichtung für einen extrudierten Kunststoffprofilstrang und ein Verfahren zum Kalibrieren eines extrudierten Kunststoffprofilstrangs und ein kalibriertes Kunststoffprofil.

Ein Verfahren zum Kalibrieren eines extrudierten Kunststoffprofilstrangs und eine Kalibriervorrichtung für einen extrudierten Kunststoffprofilstrang sind aus der EP 0 584 476 A1 bekannt.

Kalibrierte Kunststoffprofile mit Formschlusselementen sind z.B. aus der WO 2013/189604 A1 bekannt. Bei den dort gezeigten Hohlkammerprofilen wird entweder ein einzelner Profilstrang extrudiert und kalibriert und nach der abgeschlossenen Kalibrierung und Abkühlung z.B. durch Formschlusselemente, die als Klipsverbindung ausgebildet sind, geschlossen, oder es werden zwei getrennte Profilstränge extrudiert und kalibriert und diese nach Kalibrierung und Abkühlung durch eine Formschlussverbindung, die als Rollengelenk bezeichnet ist, verbunden.

Weitere kalibrierte Kunststoffprofile mit Formschlusselementen, die als sogenannte Anti-Bimetall-Profile oder Schubweich-Profile eine Längsverschieblichkeit zweier Profilteile aufweisen, sind aus der DE 199 56 415 C1, der US 2020/0040640 A1 und der EP 0 657 612 A1 bekannt. Auch bei diesen kalibrierten Kunststoffprofilen mit Formschlusselementen werden die entsprechenden Elemente bzw. Profilteile zunächst extrudiert und kalibriert und nach der Abkühlung z. B. durch Klipsen verbunden.

Aus der DE 10 2018 132 434 A1 ist ein Verfahren zum Herstellen von zwei Kunststoffprofilen, die durch einen Formschluss verbunden sind, in einem Extrusionswerkzeug bekannt.

Aufgabe der vorliegenden Erfindung ist es, eine Kalibriervorrichtung für einen extrudierten Kunststoffprofilstrang und ein Verfahren zum Kalibrieren eines extrudierten Kunststoffprofilstrangs anzugeben, die die Herstellung kalibrierter Kunststoffprofile mit Formschlusselementen vereinfachen und verbessern, als auch ein kalibriertes Kunststoffprofil mit Formschlusselementen und einer verbesserten Funktionalität anzugeben.

Diese Aufgabe wird gelöst durch eine Kalibriervorrichtung nach Anspruch 1 oder ein Verfahren zum Kalibrieren eines extrudierten Kunststoffprofilstrangs nach Anspruch 7 oder ein kalibriertes Kunststoffprofil nach Anspruch 13.

Weiterbildungen der Erfindung sind in den abhängigen Ansprüchen angegeben.

Es wird durch elastisches und/oder plastisches Verformen der Bereiche extrudierter Kunststoffprofilstränge, die die Formschlusselemente bilden, im noch weichen Zustand innerhalb des Kalibrators die Herstellung kalibrierter Kunststoffprofilstränge ermöglicht, bei denen die Formschlusselemente am Ausgang des Kalibrators bereits verbunden sind. Dadurch lassen sich kalibrierte Kunststoffprofilstränge mit Formschlusselementen herstellen, die anders nicht oder nur sehr aufwendig in den Formschluss zu bringen wären.

Weitere Merkmale und Zweckmäßigkeiten ergeben sich aus der Beschreibung von Ausführungsbeispielen anhand der Figuren.

Von den Figuren zeigen:
- Fig. 1: eine Extrusionsanlage zur Kunststoffprofilextrusion, in der eine Ausführungsform der Kalibriervorrichtung vorgesehen ist und mit der eine Ausführungsform des Verfahrens ausführbar ist;
- Fig. 2: eine erste Ausführungsform einer Kalibriervorrichtung für einen extrudierten Kunststoffprofilstrang, die in den Ansichten a) bis d) den Querschnitt der Kalibriervorrichtung an den Querschnitten Q1 bis Q4 aus Fig. 1 zeigt;
- Fig. 3: eine zweite Ausführungsform einer Kalibriervorrichtung für einen extrudierten Kunststoffprofilstrang, die in den Ansichten a) bis d) den Querschnitt der Kalibriervorrichtung an den Querschnitten Q1 bis Q4 aus Fig. 1 zeigt;
- Fig. 4: dieselben Querschnitte aus Fig. 3a) bis d), in denen der Querschnitt des fertig kalibrierten Profils im Hintergrund zur Verdeutlichung der Verformung eingeblendet ist;
- Fig. 5: eine dritte Ausführungsform einer Kalibriervorrichtung für einen extrudierten Kunststoffprofilstrang, die in den Ansichten a) bis d) den Querschnitt der Kalibriervorrichtung an den Querschnitten Q1 bis Q4 aus Fig. 1 zeigt;
- Fig. 6: die Extrusionsanlage aus Fig. 1 mit einer Querschnittsdarstellung der Extrusionsdüse und des Kalibrators der dritten Ausführungsform; und
- Fig. 7: in a) die erste Ausführungsform aus Fig. 2 a) mit Markierung eines Ausschnitts durch ein gestricheltes Rechteck, in b) den Ausschnitt aus Fig. 7 a) in vergrößerter Darstellung, und in c) einen Querschnitt des oberen Profils 51 aus Fig. 3 d) in vergrößerter Darstellung.

In der nachfolgenden Beschreibung von Ausführungsbeispielen werden alle Merkmale, auch wenn sie in Zusammenhang mit anderen Merkmalen beschrieben werden, separat und als mit den Merkmalen anderer Ausführungsformen kombinierbar offenbart, selbst falls das nicht ausdrücklich beschrieben wird, außer die entsprechende Kombination ist technisch nicht möglich.

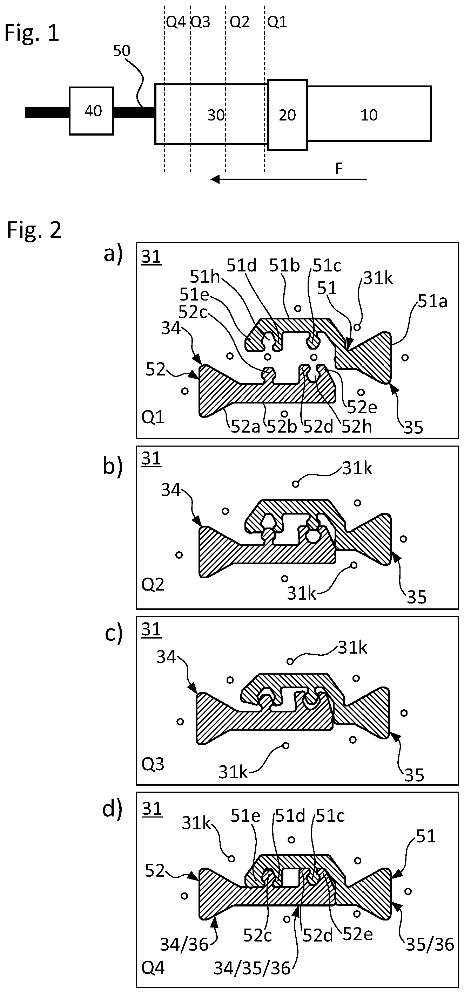

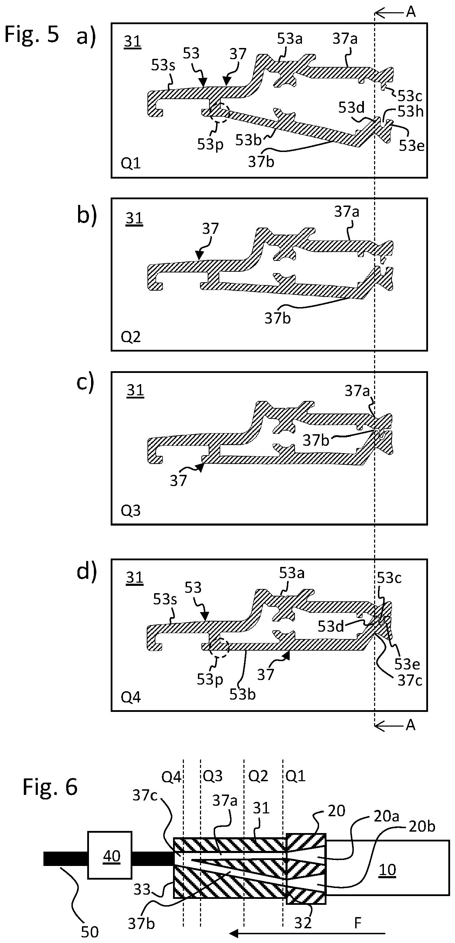

Fig. 1 zeigt schematisch eine Extrusionsanlage zur Kunststoffprofilextrusion. Die Anlage weist einen Extruder 10 auf, mit dem in üblicher Weise Kunststoff z.B. durch ein oder mehrere Extrusionsschnecken erhitzt und als extrudierter Kunststoff ausgegeben werden kann. An einem Ausgang des Extruders ist eine Extrusionsdüse 20 zum Ausgeben eines extrudierten Kunststoffprofilstrangs in üblicher Weise angeordnet. Der Extrusionsdüse 20 nachfolgend ist eine Kalibriervorrichtung 30, die entsprechend den Lehren der vorliegenden Anmeldung ausgebildet ist, angeordnet. An der in Fig. 1 links dargestellten Ausgangsseite der Kalibriervorrichtung 30 wird ein kalibriertes Kunststoffprofil 50 ausgegeben. Daher bewegt sich der Kunststoff in der durch den Pfeil F angezeigten Bewegungsrichtung von dem Extruder 10 durch die Extrusionsdüse 20 auf der in Fig. 1/Fig. 6 rechts befindlichen Eingangsseite 32 in die Kalibriervorrichtung 30 und auf der in Fig.1 links gezeigten Ausgangsseite 33 aus der aus der Kalibriervorrichtung 30 hinaus. Bei der in Fig. 1 gezeigten Extrusionsanlage, die für ein Profilziehverfahren ausgelegt ist, ist in der Bewegungsrichtung F stromabwärts ein Abzug 40 gezeigt, mittels dessen das kalibrierte Kunststoffprofil 50 in der Bewegungsrichtung F in üblicher Weise gezogen wird.

Bei dieser Extrusionsanlage werden in üblicher Weise die Fördergeschwindigkeit des Extruders 10 und die Abzugsgeschwindigkeit des Abzugs 40 so gesteuert bzw. geregelt, dass das Kunststoffprofil 50 entsprechend extrudiert und kalibriert wird. Das ist im Stand der Technik bekannt und wird hier nicht näher beschrieben.

In Fig. 1 sind durch die mit Q1, Q2, Q3 und Q4 bezeichneten gestrichelten Linien die Positionen von Querschnitten durch die Kalibriervorrichtung 30 senkrecht zur Bewegungsrichtung F gezeigt.

In Fig. 2 sind in den Abbildungen a) bis d) entsprechende Querschnitte durch eine erste Ausführungsform der Kalibriervorrichtung 30 gezeigt. Die Kalibriervorrichtung 30 weist einen Kalibratorkörper 31 mit einem Kanal 34, 35, 36 auf, der in der Bewegungsrichtung F von der Eingangsseite 32 zu der Ausgangsseite 33 verläuft. Der Kanal 34, 35, 36 weist stromaufwärts in Richtung der Eingangsseite 32 zwei Kanalbereiche 34, 35 mit jeweils einem eigenen Eingang auf der Eingangsseite auf. Diese beiden Kanäle verlaufen stromabwärts in der Bewegungsrichtung F derart, dass sie sich fortlaufend einander annähern und in einem Kanalbereich 36 (siehe Fig. 2d)) zusammengeführt sind.

In den Fig. 2a) bis d) ist der Außenumfang des Kalibratorkörpers 31 jeweils durch einen rechteckigen Kasten dargestellt. Der Außenumfang der jeweiligen Kanalbereiche 34, 35, 36 entspricht in Fig. 2a) bis 2d) dem Außenumfang der dort grau dargestellten Kunststoffprofilstränge 51, 52.

Wie sich in Fig. 2a) gut erkennen lässt, sind die beiden Profilstränge 51, 52 im Querschnitt zwar nicht identisch, aber sie sind für die in Fig. 2d) dargestellte Verbindung komplementär ausgebildet.

Im Stand der Technik werden diese beiden Profile separat extrudiert und kalibriert und nach der Abkühlung z.B. durch eine Längsverschiebung miteinander verbunden.

Wie sich aus dem Ablauf der Querschnitte Q1 bis Q5 in den Fig. 2a) bis 2d) gut erkennen lässt, ist es mit dem Kalibrator 30 der ersten Ausführungsform möglich, diese beiden Profilstränge 51, 52 im Kalibrator in einem Zustand, in dem sich die Profile (noch) relativ leicht verformen lassen, vor dem Austritt aus dem Kalibratorkörper 31 zu verbinden.

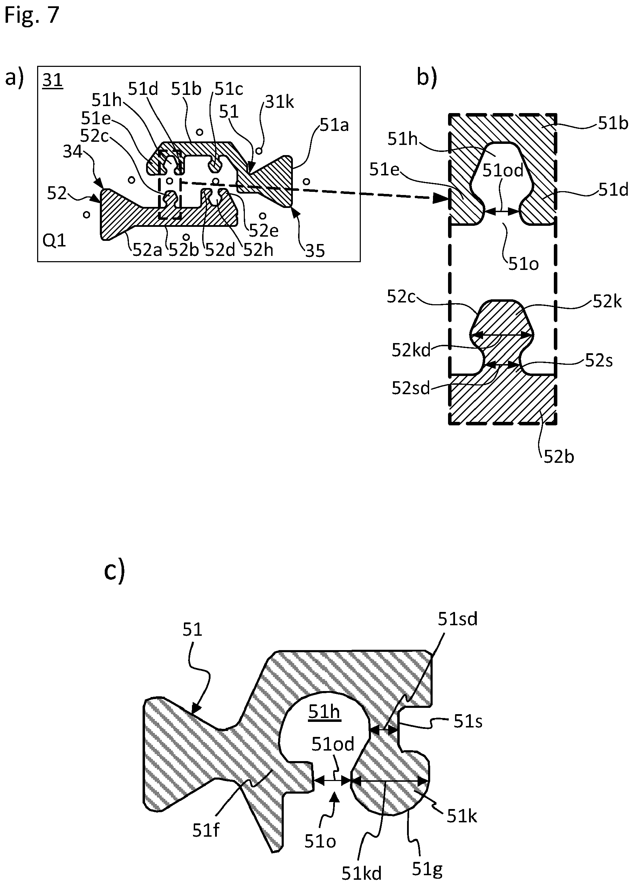

Es wird zusätzlich auf die Fig. 7 a), in der die Darstellung aus Fig. 2 a) mit Markierung eines Ausschnitts durch ein gestricheltes Rechteck gezeigt ist, und auf die Fig. 7 b), in der der Ausschnitt aus Fig. 7 a) in vergrößerter Darstellung gezeigt ist, Bezug genommen. Die beiden Profilstränge 51, 52 weisen jeweils einen sogenannten Einrollkörper/Einrollkopf 51a, 52a auf. Solche Einrollkörper sind im Stand der Technik zur Verbindung mit Aluminiumprofilen durch sogenanntes Einrollen bekannt. Beide Profile weisen jeweils eine Profilstrebe 51b, 52b auf, die mit dem entsprechenden Einrollkopf 51a, 52b einstückig ausgebildet ist. Bei dem in Fig. 2 oberen Profil 51 ist diese Strebe 51b gewinkelt ausgebildet, während sie bei dem in Fig. 2 a) / 7 a) unten dargestellten Profil 52 geradlinig ist. Diese Unterschiede spielen für die vorliegende Lehre aber keine Rolle. Die beiden Profilstränge 51, 52 könnten im Querschnitt auch identisch sein. An den Streben 51b, 52b sind jeweils komplementäre Elemente ausgebildet, die im zusammengefügten Zustand, der in Fig. 2d) gezeigt ist, durch Formschluss verbunden sind. Die Fig. 7 a) und b) zeigen nur ein Paar der komplementären Elemente, aber die Beschreibung und Darstellung gilt offensichtlich auch für die anderen komplementären Elemente aus Fig. 2 a) bis d). Diese komplementären Elemente bestehen aus einem Vorsprung 51c, 52c, der einen von der entsprechenden Strebe 51b, 52b vorstehenden Stamm 52s (Fig. 7 b)) und an dem freien Ende des Stamms einen Kopf 52k (Fig. 7 b)) aufweist. Der Kopf 52k weist im Querschnitt einen deutlich größeren Durchmesser 52kd (Fig. 7 b)) als der Stamm 52s/52sd (Fig. 7 b)) auf, wie in den Fig. 2a) bis 2d) und 7 a), b) gut zu erkennen ist. Vorzugsweise ist der Durchmesser 52kd des Kopfes 52k wenigstens 1,5-mal, bei den beanspruchten kalibrierten Kunststoffprofilen wenigstens 2-mal und noch bevorzugter wenigstens 2,5-mal größer als der Durchmesser 52sd des Stamms 52s. Eine sinnvolle Obergrenze liegt bei einem Durchmesser 52kd des Kopfes 52k, der höchstens 5-mal, bevorzugter 4-mal und noch bevorzugter 3-mal, wie z.B. 2,5-mal größer als der Durchmesser 52sd des Stamms 52s ist.

An dem jeweils anderen Profilstrang ist als zweites komplementäres Element eine Ausnehmung 51h, 52h ausgebildet, deren Kontur im Querschnitt zur Aufnahme des Kopfes 52k des komplementären Vorsprungs 51c, 52c angepasst ist. Die entsprechende Ausnehmung 51h, 52h wird im Querschnitt lateral beidseits von Wänden der dort als Vorsprünge gezeigten Profilbereiche 51d, 51e, 52d, 52e begrenzt. Die entsprechende Ausnehmung weist an ihrer dem anderen komplementären Element (Vorsprung) zugewandten Seite eine Öffnung 51o (Fig. 7 b)) auf, deren Durchmesser 51od (Fig. 7 b)) kleiner als der Durchmesser 52kd des Kopfes 52k des entsprechenden komplementären Vorsprungs 51c, 52c ist. Der Durchmesser 51od dieser Öffnung ist so bemessen, dass er mit einem kleinen Aufmaß von 5 bis 50 %, bevorzugter 5 bis 25 % und noch bevorzugter 5 bis 15 %, wie z.B. 10 %, dem Durchmesser 52sd des Stamms 52s des komplementären Vorsprungs 51c, 52c entspricht. In anderen Worten, bei der Kalibriervorrichtung 30 ist das Aufmaß ausgewählt ist aus einem Bereich von z.B. 5% bis 25% der addierten Abmessungen der die wenigstens zwei komplementären Elemente bildenden Abschnitte des extrudierten Kunststoffprofilstrangs. Abhängig von dem Anwendungsgebiet könnte auch ein größeres Aufmaß gewählt werden, aber der Durchmesser 51od der Öffnung 51o der Ausnehmung 51h, 52b sollte bevorzugt kleiner als der Durchmesser 52kd des Kopfes 52k des entsprechenden komplementären Vorsprungs 51c, 52c sein.

Die Kalibratorvorrichtung aus Fig. 2 ist so ausgebildet, dass der eine Profilstrang 51 in einer Richtung, in Fig. 2 der Höhenrichtung, über dem anderen Profilstrang 52 in den entsprechenden Kanalbereichen 35, 34 bewegbar ist. Die beiden Kanalbereiche 35, 34 sind dabei derart ausgebildet, dass sie fortschreitend mit der Bewegungsrichtung F näher aneinander ausgebildet sind und dann in einem einzelnen Kanalbereich 36 (Fig. 2d)) zusammengeführt sind.

Dadurch werden die komplementären Elemente Vorsprung und Ausnehmung aufeinander zu bewegt und, wie sich aus den Fig. 2b) bis 2d) gut erkennen lässt, in Formschluss gebracht.

Die Kanalbereiche 35, 34 und 36 sind dabei so ausgebildet, dass insbesondere in den Kanalbereichen zwischen den in Fig. 2b) und 2d) gezeigten Querschnitten Q2, Q3 und Q4, die Kanalbereiche ein Aufmaß gegenüber den addierten Abmessungen der entsprechenden Vorsprünge 51e, 51d und 52c bzw. 52d, 52e und 51c aufweisen, die ein Ausweichen der die Ausnehmung begrenzenden Wandabschnitte 51e, 51d bzw. 52d, 52h durch in diesem Fall elastische Verformung erlauben.

Das bedeutet, da die Profilstränge 51, 52 in den entsprechenden Kanalbereichen 35, 34 auf der Außenseite des Profilstrangs bereits eine feste Schicht aufweisen, die auch bei Verformung eine Rückstellkraft aufweist, durch einen entsprechend gestalteten Verlauf der Kanalbereiche 35, 34 und 36 die feste Schicht die gewünschte elastische Verformung unterhalb der Elastizitätsgrenze erlaubt und dann die Vorsprünge 51e, 51d bzw. 52d und 52e nach dem Durchtritt der Köpfe durch die Öffnung der entsprechenden Ausnehmung 51h bzw. 52h wieder in die in Fig. 2d) gezeigte Stellung zurückschnappen lässt. Das bedeutet, in dem in Fig. 2b) gezeigten Querschnitt Q2 befinden sich die entsprechenden Vorsprünge 51e, 51d bzw. 52d, 52e in der gewünschten Position mit der entsprechenden Form der Ausnehmungen 51h bzw. 52h, in der in Fig. 2c) gezeigten Position sind diese Vorsprünge elastisch so verformt, dass der Kopf 51c bzw. 52c durch die Öffnung der Ausnehmung gedrückt werden kann, und in der in Fig. 2d) gezeigten Stellung sind die entsprechenden Vorsprünge 51e, 51d und 52d, 52e wieder in die in Fig. 2b) gezeigte Position durch die elastischen Rückstellkräfte bewegt worden.

Die entsprechenden Querschnitte Q1, Q2, Q3 und Q4 müssen selbstverständlich nicht exakt an den in Fig. 1 schematisch gezeigten Positionen sein. Z.B. könnte der Kalibratorkörper 31 stromabwärts des Querschnitts Q4 auch noch länger sein.

In den Fig. 2a) bis d) sind durch kleine Kreise, die teilweise mit dem Bezugszeichen 31k bezeichnet sind, Kühlkanäle in dem Kalibratorkörper schematisch dargestellt. Alle in Fig. 2 gezeigten derartigen Kreise sind Kühlkanäle, aber das Hinzufügen von Bezugszeichen für alle diese Kühlkanäle hätte die Zeichnung unübersichtlich gemacht, so dass nur einige der Kreise mit dem entsprechenden Bezugszeichen versehen sind.

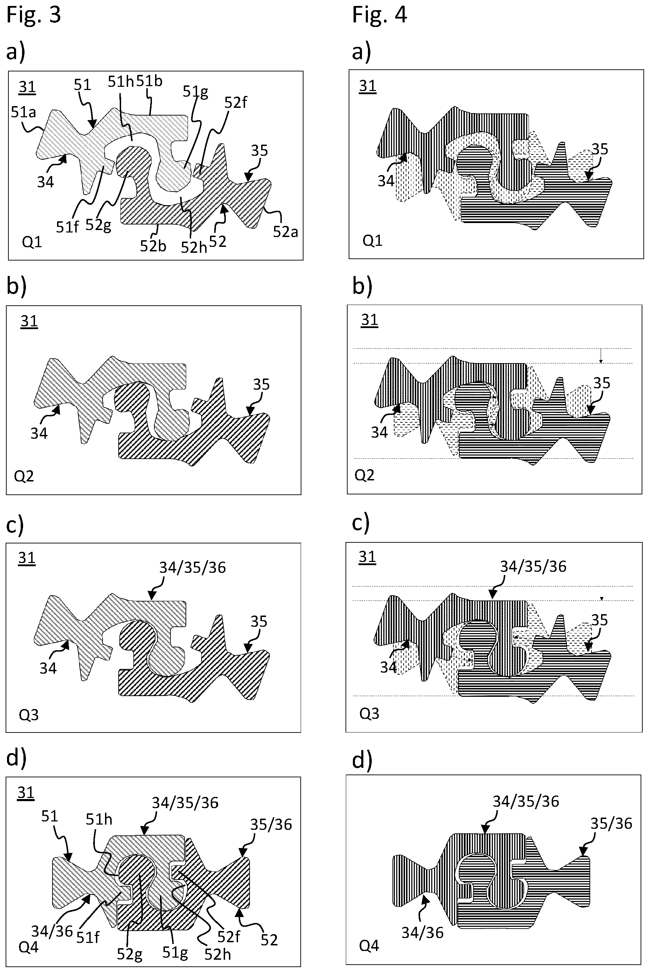

Die Ausbildung des Kalibrators 30 derart, dass der Formschluss der komplementären Elemente durch elastische Verformung hergestellt wird, ist nicht auf die in Fig. 2 gezeigte Profilform begrenzt. Es können auch einseitige Formschlüsse wie Klipselemente oder Rollengelenke der in der WO 2013/189604 A1 oder in der WO 2018/069859 A1 gezeigten Art durch entsprechende elastische Verformung (Zusammenfügung) im Kalibrator verbunden werden. Die in Fig. 2 gezeigten Profilstränge oder die eben genannten Profilstränge könnten auch durch plastische Verformung, wie sie nachfolgend unter Bezugnahme auf die Fig. 3 beschrieben wird, oder durch eine Kombination aus elastischer und plastischer Verformung im Kalibrator verbunden werden.

Die Fig. 3 zeigt eine zweite Ausführungsform des Kalibrierers/Kalibrators 13. Der Kalibrator ist wiederum in den Querschnitten Q1 bis Q4 aus Fig. 1 in den entsprechenden Fig. 3a) bis 3d) gezeigt. Diejenigen Elemente und Gestaltungen wie Formen und Abmessungen und deren Bereiche, die denjenigen der ersten Ausführungsform entsprechen, werden nicht nochmals beschrieben und/oder gezeigt. Zum Beispiel werden in Fig. 3 keine Kühlkanäle 31k in dem Kalibratorkörper dargestellt und auch nicht beschrieben, obwohl sie natürlich vorhanden sein können, und die Abmessungen und Bereiche der komplementären Elemente werden nicht nochmals beschrieben, etc..

Bei der zweiten Ausführungsform, die in Fig. 3 gezeigt ist, weist der Kalibrierer 30 einen Kalibratorkörper 31 auf, der auf der Eingangsseite 32 (siehe Fig. 6) zwei getrennte Eingänge aufweist, die in voneinander getrennte Kanalbereiche 34, 35 münden. In diese Kanalbereiche werden extrudierte Kunststoffprofilstränge 51, 52 eingeführt, die in Fig. 3 im Querschnitt in Schraffur dargestellt sind. Der Außenumfang der dargestellten Profilstränge 51, 52 entspricht wiederum der Innenkontur der entsprechenden Kanalbereiche 34, 35, 36.

Die Fig. 7 c) zeigt einen Querschnitt des oberen Profils 51 aus Fig. 3 d) in vergrößerter Darstellung. Bei der in Fig. 3 gezeigten Ausführungsform sind die beiden Profilstränge im Querschnitt identisch. Im Unterschied zu der Ausführungsform aus Fig. 2 weisen die beiden Profilstränge 51, 52 Vorsprünge 51g, 52g auf, die gleichzeitig als Vorsprung mit Stamm 51s und Kopf 51k (Fig. 7 c)) und als einer der beiden Vorsprünge, die eine seitliche Wand der entsprechenden Ausnehmung 51h, 52h bilden, dienen. Die entsprechenden Kanalbereiche 34, 35, 36 sind mit entsprechenden Bereichen für diese Vorsprünge ausgebildet.

Wie aus der Fig. 3 in den entsprechenden Querschnitten gut zu erkennen ist, wird der Formschluss nicht durch eine elastische Verformung sondern durch eine plastische Verformung der entsprechenden Bereiche der Profilstränge 51, 52 erreicht. Im Einzelnen weist der Kanalbereich 34 einen Bereich zum Kalibrieren eines Einrollkopfs 51a des Profilstrangs 51 auf, an den sich eine Strebe 51b anschließt. An der Strebe 51b ist ein Vorsprung 51g mit Stamm 51s und Kopf 51k am freien Ende des Stamms 51s ausgebildet.

Die diesbezügliche Beschreibung der Fig. 2 wird hier nicht wiederholt. Anders als bei dem Profil der Fig. 2 schließt sich der andere Vorsprung 51f, der zusammen mit dem Vorsprung 51g die Ausnehmung 51h bildet, auch an den Profilkopf 51a an. Das wäre natürlich bei einer anderen Profilform auch anders möglich, indem die Strebe 51b länger ausgebildet ist und der Vorsprung 51f an der Strebe 52b ausgebildet ist. Der Kanalbereich 34 weist entsprechende Bereiche zum Kalibrieren dieser Bestandteile des Profilstrangs 51a auf, wie aus der Fig. 3a offensichtlich ist.

Bei der in Fig. 3 gezeigten Ausführungsform sind die beiden Profilstränge im Querschnitt identisch. Im Stand der Technik würde ein solcher Profilstrang durch einen Kalibrator kalibriert, danach entsprechend zugeschnitten, und dann durch Längsverschiebung mit einem anderen Stück des Profilstrangs verbunden werden.

Mit dem Kalibrator 30 der zweiten Ausführungsform ist es möglich, zwei identische Profilstränge zu extrudieren und dann in demselben Kalibrator 30 zu kalibrieren und gleichzeitig zu verbinden.

Dazu werden die beiden Profilstränge 51, 52 durch die entsprechenden Kanalbereiche 34, 35 nicht nur in einer ersten Richtung senkrecht zu der Bewegungsrichtung (der Höhenrichtung in Fig. 3) zueinander geführt, sondern der Querschnitt der Profilstränge 51, 52 wird durch entsprechende Gestaltung der Kanalbereiche 34, 35 auch in einer zweiten Richtung, die senkrecht zu der Bewegungsrichtung und schräg/senkrecht zu der ersten Richtung ist (der in Fig. 3 horizontalen Richtung), geändert/verformt. Dabei werden sowohl die Vorsprünge 51g, 52g als auch die Vorsprünge 51f, 52f verformt und so die Öffnung 51o (Fig. 7 c)) der entsprechenden Ausnehmungen 51h, 52h gegenüber dem geöffneten Zustand in Fig. 3a) geschlossen, wie in Fig. 3d) gezeigt ist. Mit anderen Worten, die beiden Kanalbereiche, und dabei insbesondere die Kanalbereiche für die die komplementären Elemente bildenden Bereiche der Profilstränge, sind so ausgebildet, dass sie entlang der Bewegungsrichtung F zunächst näher zueinander kommen und daran anschließend in einem Kanalbereich 36 zusammengeführt sind. Diese Ausbildung der Kanalbereiche 34, 35, 36 erlaubt die plastische Verformung und die Erzeugung des Formschlusses der entsprechenden komplementären Elemente, wie es in Fig. 3d) gezeigt ist. Die entsprechenden Bereiche der Profilstränge weisen selbstverständlich auch in diesem Fall eine feste Schicht an ihrer Außenseite auf, die aber durch die entsprechende Gestaltung der der Kanalbereiche 34, 35, 36 über die Elastizitätsgrenze (Streckgrenze) verformt werden.

In Fig. 4 sind dieselben Querschnitte wie in Fig. 3 gezeigt. Im Hintergrund der Querschnitte in den Fig. 4a), 4b) und 4c) ist zusätzlich schraffiert der Endzustand des kalibrierten Kunststoffprofils 50 am Ausgang aus dem Kalibrierer 30, wie er dem Querschnitt in Fig. 4d) weitestgehend entspricht, gezeigt. Durch Überlagerung dieser Darstellungen ist gut zu erkennen, wie die Kanalbereiche 34, 35 einander zunächst im Wesentlichen in der Höhenrichtung in Fig. 4, d.h., der Höhenrichtung des Kalibrators 30 aus Fig. 1, angenähert werden (vgl. Fig. 4a) und b)), danach in der Querrichtung des Kalibrierers einander weiter angenähert und zusammengeführt werden (vgl. Fig. 4b) bis 4d)). Die in den Fig. 3 und 4 gezeigte relativ strikte Trennung der Bewegungen zunächst der Vorsprünge 51g, 52g und dann der Vorsprünge 51f und 52f ist möglich aber nicht zwingend. Die entsprechenden "Bewegungen" der Kanalbereiche aufeinander zu können in dem Kalibratorkörper 31 auch so ausgebildet sein, dass sie mehr oder minder an den gleichen Stellen der Querschnitte in der Bewegungsrichtung F stattfinden.

Der Kalibrator aus Fig. 2 kann relativ einfach in herkömmlicher Weise z.B. als ein Kalibratorblock durch Drahterosion hergestellt werden. Bei dem vergleichsweise komplexen Verlauf der Kanalbereiche 34, 35, 36 in dem Kalibrator aus Fig. 3 ist das nicht so einfach möglich. Dieser Kalibrator könnte daher z.B. durch Herstellung in mehreren Blöcken in der Längsrichtung/Bewegungsrichtung F oder durch 3D-Druck mit den verhältnismäßig komplexen Kanalbereichen 34, 35, 36 hergestellt werden.

Zusammenfassend sind die Kalibriervorrichtungen 30 aus den Fig. 1 bis 3 Kalibriervorrichtungen für einen extrudierten Kunststoffprofilstrang zum Kalibrieren des extrudierten Kunststoffprofilstrangs in ein kalibriertes Kunststoffprofil 50, das aus dem Ausgang auf der Ausgangsseite 33 austritt. Der Kalibratorkörper weist einen Kanal 34, 35, 36 mit zwei Kanalbereichen 34, 35 mit separatem Eingang auf der Eingangsseite 32, die in einen Kanalbereich 36 münden, der in einem Ausgang auf der Ausgangsseite 33 endet, an dem das kalibrierte Kunststoffprofil 50 ausgegeben werden kann. Bei der in Fig. 1 gezeigten Extrusionsanlage erfolgt die Ausgabe durch Ziehen des kalibrierten Kunststoffprofils aus dem und durch den Kalibrator.

Die Kanalbereiche 34, 35 und 36 sind dabei so gestaltet und verlaufen so in der Bewegungsrichtung/Längsrichtung F durch den Kalibratorkörper 31, dass die entsprechenden komplementären Elemente, die bei den Ausführungsformen aus Fig. 2 und 3 als Vorsprung 51c, 52c bzw. 51g, 52g und entsprechende Ausnehmungen 51h, 52h ausgebildet sind, in der Längsrichtung entlang der Bewegungsrichtung F zunächst näher zueinander gebracht und daran anschließend in einem einzelnen Kanalbereich 36 zusammengeführt sind. Dabei sind die Kanalbereiche so ausgebildet, dass sie das auch im Stand der Technik übliche Aufmaß für die Kalibrierung und in den Bereichen, in denen die komplementären Element zusammengeführt werden, insbesondere an/in den Stellen/Bereichen, an/in denen eine elastische Verformung stattfinden soll, ein die elastische Verformung erlaubendes Übermaß zusätzlich zu den addierten Abmessungen der entsprechenden Abschnitte der die komplementären Elemente bildenden Abschnitte der Kunststoffprofile aufweisen.

Bei einer rein plastischen Verformung wie z.B. der zwischen der Querschnitten Q3 und Q4 stattfindenden plastischen Verformung in Fig. 3 ist kein zusätzliches Übermaß notwendig, da eine plastische und keine elastische Verformung stattfindet.

Die Lehre der vorliegenden Erfindung ist nicht nur auf eine Kalibriervorrichtung und die entsprechende Herstellung von kalibrierten Kunststoffprofilen, die aus zwei getrennten Kunststoffprofilsträngen bestehen, anwendbar, sondern auch auf kalibrierte Kunststoffprofilstränge, die einteilig extrudiert und kalibriert werden und entsprechende Formschlusselemente aufweisen.

Ein solches, drittes Ausführungsbeispiel, wird unter Bezugnahme auf Fig. 5 beschrieben. Diese dritte Ausführungsform einer Kalibriervorrichtung 30 ist in Fig. 6 in einer Extrusionsanlage aus Fig. 1 im Querschnitt entlang der Linie A-A aus Fig. 5 gezeigt. In Fig. 6 ist auch die Extrusionsdüse 20 schematisch im Querschnitt entlang der Linie A-A gezeigt. Diejenigen Elemente und Gestaltungen, die denjenigen der ersten/zweiten Ausführungsform entsprechen, wie z.B. Kühlkanäle 31k, werden nicht nochmals beschrieben und/oder gezeigt.

Der Kalibrierer/Kalibrator 30 der dritten Ausführungsform weist einen Kalibratorkörper 31 mit einem Kanal 37 auf, der in zwei Kanalbereiche 37a und 37b verzweigt ist. Diese beiden Kanalbereiche 37a, 37b sind in Fig. 6 im Querschnitt gut zu erkennen. Die Extrusionsdüse 20 weist entsprechend eine sich verzweigende Düsenform mit entsprechenden Bereichen 20a und 20b auf. So kann auf der Eingangsseite 32 des Kalibratorkörpers 31 ein extrudierter Kunststoffprofilstrang in den Kanal 37 eintreten. Die beiden Kanalbereiche 37a, 37b werden, wie bei der ersten und zweiten Ausführungsform die zunächst getrennten separaten Kanalbereiche 34, 35 in der Längsrichtung/Bewegungsrichtung F fortlaufend näher zueinander geführt und werden in dem in Fig. 5 rechts gezeigten Bereich zusammengeführt, wie aus den Fig. 5a) bis d) offensichtlich ist. Die zentraler in dem Kalibratorkörper 31 gelegenen Teile der Bereiche 37a, 37b werden nicht zusammengeführt, so dass das kalibrierte Kunststoffprofil 50 einen Hohlprofilkörper bildet.

Das Kunststoffprofil, das mit dem Kalibrierer 30 der dritten Ausführungsform kalibrierbar ist, weist, in Fig. 5 links, einen Stamm 53s und daran anschließend zwei Streben 53a, 53b auf. Die Strebe 37a weist an ihrem freien Ende einen Vorsprung 53c auf. Die andere Strebe 37b weist an ihrem dem freien Ende der Strebe 37a im kalibrierten Zustand gegenüberliegenden freien Ende eine Ausnehmung 53h, die komplementär zu dem Vorsprung 53c ist, auf. Die Ausnehmung 53h wird von entsprechenden Seitenwänden der Vorsprünge 53d, 53e begrenzt. Auch wenn es in Fig. 5 nicht so detailliert wie in den Fig. 2 und 3 dargestellt ist, weist der Vorsprung 53c einen Kopf auf, dessen Durchmesser größer als der des Stamms des Vorsprungs 53c ist. Die Ausnehmung 53e weist wiederum eine dem Vorsprung 53c zugewandte Öffnung auf, deren Durchmesser im finalen Zustand wiederum kleiner als der Durchmesser des Kopfes des Vorsprungs 53c ist. Das Bringen des Vorsprungs 53c in Formschluss mit der Ausnehmung 53h erfolgt bei der in Fig. 5 gezeigten Ausführungsform wiederum durch elastische Verformung. Es wäre aber auch eine Gestaltung mit plastischer Verformung möglich. Diese elastische Verformung zur Ausbildung des Formschlusses ist kombiniert mit einer plastischen Verformung wenigstens eines Abschnitts des Profilstrangs, hier des Abschnitts 53b, in dem in Fig. 5a) eingekreisten Bereich 53p. Auch in diesem Fall können die Kanalbereiche so ausgebildet sein, dass die Verformung in dem Bereich 53p oder einem anderen Bereich elastisch stattfindet, so dass bei Trennung des Formschlusses ein Öffnen des Hohlprofils erfolgt, ohne dass dieses "aufgebogen" werden muss. Bei der in Fig. 5 gezeigten Ausführungsform ist das aber nicht der Fall.

Mit den in den Fig. 1 bis 6 gezeigten Kalibriervorrichtungen 30 oder mit anders gestalteten Kalibriervorrichtungen 30 für einen extrudierten Kunststoffprofilstrang ist es möglich, das folgende Verfahren zum Kalibrieren eines extrudierten Kunststoffprofilstrangs in ein kalibriertes Kunststoffprofil 50, das im kalibrierten Zustand wenigstens zwei komplementäre Elemente aufweist, die im Querschnitt senkrecht zu einer Längsrichtung des kalibrierten Kunststoffprofils einen Formschluss bilden, durchzuführen.

Bei diesem Verfahren wird zunächst wenigstens ein extrudiertes und zu kalibrierendes Kunststoffprofil in wenigstens einen Kanal des Kalibratorkörpers 31 eingeführt. Bei den in den Fig. 1 bis 4 gezeigten Ausführungsformen werden wenigstens zwei extrudierte Kunststoffprofile in zwei getrennte Eingänge entsprechender Kanalbereiche des Kalibratorkörpers 31 eingeführt, während bei der Ausführungsform in Fig. 5 ein extrudierter Kunststoffprofilstrang in einen Eingang auf der Eingangsseite des Kalibratorkörpers 31 eingeführt wird. Selbstverständlich können auch mehr als zwei Kunststoffprofilstränge entsprechend eingeführt und durch entsprechende komplementäre Elemente im Kalibrator durch entsprechende Ausbildung und Führung von Kanälen in einen Formschluss gebracht werden.

Nach dem Einführen des wenigstens einen extrudierten und zu kalibrierenden Kunststoffprofilstrangs in den wenigstens einen Kanal des Kalibratorkörpers wird dieser Kunststoffprofilstrang durch den oder die Kanäle in dem Kalibratorkörper in einer Bewegungsrichtung F von der Eingangsseite 32 zu einer Ausgangsseite 33, die auf einer der Eingangsseite 32 entgegengesetzten Seite des Kalibratorkörpers 31 liegt, z.B. durch Ziehen bewegt. Die Eingänge und Kanalbereiche sind dabei so ausgebildet, dass die wenigstens zwei komplementären Elemente des zu kalibrierenden Kunststoffprofils senkrecht zu der Bewegungsrichtung F voneinander getrennt sind und keinen Formschluss bilden.

Während des Bewegens des zu kalibrierenden Kunststoffprofils in der Bewegungsrichtung F in dem Kalibratorkörper werden die entsprechenden Bereiche des zu kalibrierenden Kunststoffprofils, die die wenigstens zwei komplementären Elemente bilden, fortlaufend immer näher zueinander gebracht (durch entsprechende Ausbildung und einen entsprechenden Verlauf der Kanalbereiche) und daran anschließend so zusammengeführt, dass durch plastische und/oder elastische Verformung die komplementären Elemente in Formschluss gebracht werden. Bei einer weiteren Bewegung in Richtung der Bewegungsrichtung F wird so ein kalibriertes Kunststoffprofil, bei dem die beiden komplementären Elemente einen Formschluss bilden, auf der Ausgangsseite ausgegeben.

Bei einem Verfahren, das den Fig. 2 bis 4 zugrunde liegt, wird je eines der beiden komplementären Elemente in einen Eingang in einen Kanalbereich eingeführt, der getrennt von dem Eingang und Kanalbereich ist, in den das andere der beiden komplementären Elemente eingeführt wird.

Bei einem Verfahren, das in der Fig. 5 gezeigt ist, werden beide Bereiche des zu kalibrierenden Kunststoffprofils, die die komplementären Elemente bilden, in denselben Kanal aber in zunächst voneinander getrennte Bereiche desselben Kanals eingeführt. Daran anschließend werden diese getrennten Kanalbereiche und damit die entsprechenden Bereiche des extrudierten Kunststoffprofilstrangs zunächst näher zueinander gebracht und danach zusammengeführt.

Mit den Extrusionsanlagen und Kalibriervorrichtungen aus den Fig. 1 bis 6 sowie dem entsprechenden Verfahren lässt sich ein kalibriertes Kunststoffprofil 50 herstellen, das z.B. aus Polyamid mit oder ohne Glasfaserverstärkung hergestellt ist, das sich in einer Längsrichtung erstreckt und senkrecht zu der Längsrichtung eine Querschnittsform aufweist, in der wenigstens zwei komplementäre Elemente im Querschnitt einen Formschluss bilden.

Durch die Verformung im weichen Zustand im Kalibrator lässt sich bei diesen kalibrierten Kunststoffprofilen ein Formschluss der wenigstens zwei komplementären Elemente herstellen, der nach sich Abkühlung, also bei Raumtemperatur, in jeder Richtung senkrecht zu der Längsrichtung nur noch durch eine Kraft trennen lässt, die das entsprechende kalibrierte Kunststoffprofil beschädigt. Dasselbe gilt, falls der entsprechende Formschluss durch Bewegung senkrecht zu der Längsrichtung hergestellt werden sollte. Das Kunststoffprofil wird dabei so bemessen, dass es durch eine Kraft in jeder zu der Längsrichtung senkrechten Richtung, deren Betrag kleiner als oder gleich 300 N pro 2 cm Länge des Kunststoffprofils 50 ist, nicht trennbar ist. Bei Überschreiten dieses Kraftbetrags wird eine Trennung zu einer Schädigung und/oder Zerstörung der den Formschluss bildenden Elemente oder anderer Bereiche des kalibrierten Kunststoffprofils führen. Vorzugsweise ist der Betrag, mit dem sich der Formschluss nicht trennen lässt, kleiner als oder gleich 400 N pro 2 cm Länge des Kunststoffprofils, noch bevorzugter kleiner als oder gleich 500 N pro 2 cm Länge des Kunststoffprofils. Insbesondere bei einem Profil der in den Fig. 2 bis 5 gezeigten Art, bei dem ein erstes komplementäres Element an einem ersten Kunststoffprofilstrang der zwei getrennten kalibrierten Kunststoffprofilstränge ein Vorsprung mit Stamm und Kopf am freien Ende des Stamms ist, bei dem der Kopf im Querschnitt einen größeren Durchmesser als der Stamm aufweist, und bei dem das andere, zweite komplementäre Element an einem zweiten der beiden getrennten Kunststoffprofilstränge als eine Ausnehmung ausgebildet ist, die im kalibrierten Zustand eine Öffnung der Ausnehmung im Querschnitt senkrecht zu der Längsrichtung aufweist, deren Durchmesser größer als der Durchmesser des Stamms aber kleiner als der Durchmesser des Kopfes ist, ist eine derartige Gestaltung des kalibrierten Kunststoffprofils leicht zu verwirklichen. Dabei ist lediglich die Wahl der Abmessungen des Kopfes und der entsprechenden die Ausnehmung begrenzenden Elemente wie z.B. der in den Fig. 2 bis 5 gezeigten Vorsprünge entsprechend zu wählen.

Ein Ausgestaltung der Lehren ist daher auch eine Kunststoffprofilextrusionsanlage mit einem Extruder 10 mit einem Ausgang zum Ausgeben von extrudiertem Kunststoff, einer am Ausgang des Extruders angeordneten Extrusionsdüse 20 zum Ausgeben eines extrudierten Kunststoffprofilstrang, einer der Extrusionsdüse nachfolgenden Kalibriervorrichtung 30 nach einem der nachfolgenden Patentansprüche, und einem Abzug 40 für ein aus der Kalibriervorrichtung 30 ausgegebenes kalibriertes Kunststoffprofil 50.

## Patentansprüche

1. Kalibriervorrichtung (30) für einen extrudierten Kunststoffprofilstrang zum Kalibrieren des extrudierten Kunststoffprofilstrangs in ein kalibriertes Kunststoffprofils (50) mit
einem Kalibratorkörper (31) mit wenigstens einem Kanal (34, 35, 36; 37, 37a, 37b, 37c), der in einer Bewegungsrichtung (F) verläuft und wenigstens einen Eingang und einen Ausgang aufweist und am Ausgang eine Querschnittsform senkrecht zu der Bewegungsrichtung (F) aufweist, die dem kalibrierten Außenquerschnitt des zu kalibrierenden Kunststoffprofils (50) entspricht,
**dadurch gekennzeichnet,**
**dass** das zu kalibrierende Kunststoffprofil (50) im kalibrierten Zustand an der Ausgangsseite (33) wenigstens zwei komplementäre Elemente (51c, 52h, 52c, 52d; 52c, 51h, 51d, 51e; 51h, 51f, 51g, 52g; 52h, 52f, 52g, 51g; 53c, 53h, 53d, 53e) aufweist, die im Querschnitt senkrecht zu der Bewegungsrichtung (F) einen Formschluss bilden, und
**dass** der wenigstens eine Kanal (34, 35, 36; 37, 37a, 37b, 37c) am Eingang eine Querschnittsform senkrecht zu der Bewegungsrichtung (F) aufweist, in der die wenigstens zwei komplementären Elemente (51c, 52h, 52c, 52d; 52c, 51h, 51d, 51e; 51h, 51f, 51g, 52g; 52h, 52f, 52g, 51g; 53c, 53h, 53d, 53e) des zu kalibrierenden Kunststoffprofils (50) senkrecht zu der Bewegungsrichtung (F) getrennt sind und keinen Formschluss bilden, und
**dass** der wenigstens eine Kanal (34, 35, 36; 37, 37a, 37b, 37c) von dem Eingang zu dem Ausgang so ausgebildet ist, dass die die wenigstens zwei komplementären Elemente (51c, 52h, 52c, 52d; 52c, 51h, 51d, 51e; 51h, 51f, 51g, 52g; 52h, 52f, 52g, 51g; 53c, 53h, 53d, 53e) des wenigstens einen Kanals entlang der Bewegungsrichtung (F) in fortlaufend näher zueinander kommender Weise (Q1, Q2, Q3) und daran anschließend in einen kalibrierenden Kanalbereich (36; 37c) zusammengeführt derart ausgebildet sind, dass die die wenigstens zwei komplementären Elemente (51c, 52h, 52c, 52d; 52c, 51h, 51d, 51e; 51h, 51f, 51g, 52g; 52h, 52f, 52g, 51f; 53c, 53h, 53d, 53e) bildenden Abschnitte des extrudierten Kunststoffprofilstrangs durch plastische und/oder elastische Verformung am Ausgang in den Formschluss gebracht sind.

2. Kalibriervorrichtung nach Anspruch 1, bei der
der wenigstens eine Kanal (34, 35, 36) auf der Seite des wenigstens einen Eingangs die (erste) Querschnittsform senkrecht zu der Bewegungsrichtung (F) derart aufweist, dass wenigstens zwei voneinander getrennte Eingänge (34, 35) derart ausgebildet sind, dass eines (51c; 51h, 51d, 51e; 51h, 51f, 51g; 51g) der wenigstens zwei komplementären Elemente des zu kalibrierenden Kunststoffprofils in einem (34) der getrennten Eingänge in den Kanal eintreten kann und ein anderes (52h, 52c, 52d; 52c; 52g; 52h, 52f, 52g) der wenigstens zwei komplementären Elemente des zu kalibrierenden Kunststoffprofils (50) in einem anderen (35) der getrennten Eingänge in den Kanal eintreten kann, und auf der Seite des Ausgangs die (zweite) Querschnittsform (36) aufweist, die dem kalibrierten Außenquerschnitt des zu kalibrierenden Kunststoffprofil entspricht.

3. Kalibriervorrichtung nach Anspruch 1, bei der
der wenigstens eine Kanal (37, 37a, 37b, 37c) auf der Seite des wenigstens einen Eingangs die (erste) Querschnittsform senkrecht zu der Bewegungsrichtung (F) derart aufweist, dass ein Eingang (37, 37a, 37b, 37c) derart ausgebildet ist, dass jeweils eines (53c; 53h, 53d, 53e) der wenigstens zwei komplementären Elemente des zu kalibrierenden Kunststoffprofils (50) in jeweils einem anderen Bereich (37a, 37b) desselben Eingangs räumlich getrennt in den Kanal eintreten können, und auf der Seite des Ausgangs die (zweite) Querschnittsform (37c) aufweist, die dem kalibrierten Außenquerschnitt des zu kalibrierenden Kunststoffprofil (50) entspricht.

4. Kalibriervorrichtung (30) nach einem der Ansprüche 1 bis 3, bei der
der Kalibratorkörper (31) eine Eingangsseite (32) und eine Ausgangsseite (33), die auf einer der Eingangsseite (32) in einer Bewegungsrichtung (F) entgegengesetzten Seite des Kalibratorkörpers (31) angeordnet ist, und der wenigstens eine Kanal (34, 35, 36; 37, 37a, 37b, 37c) von der Eingangsseite (32) zu der Ausgangsseite (33) verläuft und an der Eingangsseite (32) eine erste Querschnittsform senkrecht zu der Bewegungsrichtung (F) aufweist, in der die wenigstens zwei komplementären Elemente (51c, 52h, 52c, 52d; 52c, 51h, 51d, 51e; 51h, 51f, 51g, 52g; 52h, 52f, 52g, 51g; 53c, 53h, 53d, 53e) des zu kalibrierenden Kunststoffprofils (50) senkrecht zu der Bewegungsrichtung (F) getrennt sind und keinen Formschluss bilden, und an der Ausgangseite (33) eine zweite Querschnittsform senkrecht zu der Bewegungsrichtung (F) aufweist, die dem kalibrierten Außenquerschnitt des zu kalibrierenden Kunststoffprofil (50) entspricht,
die Kanalbereiche des wenigstens einen Kanals, die die wenigstens zwei komplementären Elemente (51c, 52h, 52c, 52d; 52c, 51h, 51d, 51e; 51h, 51f, 51g, 52g; 52h, 52f, 52g, 51g; 53c, 53h, 53d, 53e) des zu kalibrierenden Kunststoffprofils (50) kalibrieren, in einem Abschnitt entlang der Bewegungsrichtung (F), in dem die die wenigstens zwei komplementären Elemente (51c, 52h, 52c, 52d; 52c, 51h, 51d, 51e; 51h, 51f, 51g, 52g; 52h, 52f, 52g, 51g; 53c, 53h, 53d, 53e) bildenden Abschnitte des extrudierten Kunststoffprofilstrangs durch plastische und/oder elastische Verformung in den Formschluss gebracht werden, ein Aufmaß gegenüber den addierten Abmessungen der die wenigstens zwei komplementären Elemente (51c, 52h, 52c, 52d; 52c, 51h, 51d, 51e; 51h, 51f, 51g, 52g; 52h, 52f, 52g, 51g; 53c, 53h, 53d, 53e) bildenden Abschnitte des extrudierten Kunststoffprofilstrangs aufweist.

5. Kalibriervorrichtung (30) nach einem der Ansprüche 1 bis 4, bei der
der Kalibratorkörper (31) Kühlkanäle (31k) aufweist, von denen sich vorzugsweise wenigstens einer zwischen fortlaufend näher zueinander kommenden Kanalbereichen erstreckt, und/oder
der wenigstens eine Kanal (34, 35, 36; 37, 37a, 37b, 37c) derart gestaltet ist, dass der extrudierte Kunststoffprofilstrang in der Bewegungsrichtung (F) durch den Kalibratorkörper (31) durch Ziehen an dem kalibrierten Kunststoffprofil (50) stromabwärts des Ausgangs bewegbar ist.

6. Kalibriervorrichtung (30) nach einem der Ansprüche 1 bis 5, bei der
das zu kalibrierende Kunststoffprofil (50) im kalibrierten Zustand an der Ausgangsseite (33) wenigstens zwei komplementäre Elemente (51c, 52h, 52c, 52d; 52c, 51h, 51d, 51e; 51h, 51f, 51g, 52g; 52h, 52f, 52g, 51g; 53c, 53h, 53d, 53e) derart aufweist, dass das eine erste komplementäre Element ein Vorsprung (51c; 52c; 51g; 52g; 53c) mit einem Stamm (51s; 52s) und einem Kopf (51k; 52k) am freien Ende des Stamms (51s; 52s) ist, bei dem der Kopf (51k; 52k) im Querschnitt einen größeren Durchmesser (51kd; 52kd) als der Stamm aufweist, und das andere zweite komplementäre Element eine Ausnehmung (51h; 52h; 53h) ist, die im kalibrierten Zustand zur Aufnahme des Kopfes (52k; 51k) angepasst ist und von zwei seitlichen Wandelementen (52c, 52d; 51d, 51e; 51f, 51g; 52f, 52g; 53d, 53e), die vorzugsweise von Vorsprüngen gebildet werden, derart begrenzt wird, dass die Öffnung (51o; 52o) der Ausnehmung im Querschnitt einen Durchmesser (51od, 52od) aufweist, der größer als der Durchmesser (52sd; 51sd) des Stamms (52s; 51s) aber kleiner als der Durchmesser (52kd; 51kd) des Kopfes (52k; 51k) des ersten komplementären Elements ist, so dass ein im Querschnitt den Kopf in zwei entgegengesetzten Richtungen umschließender Formschluss der Ausnehmung (51h; 52h; 52h) mit dem Kopf (52k; 51k) besteht, und
der wenigstens eine Kanal (34, 35, 36; 37, 37a, 37b, 37c) von dem Eingang zu dem Ausgang so ausgebildet ist, dass die Kanalbereiche des wenigstens einen Kanals, die den Vorsprung (51c; 52c; 51g; 52g; 53c) und die die Ausnehmung (51h; 52h; 53h) begrenzenden seitlichen Wandelemente (52c, 52d; 51d, 51e; 51f, 51g; 52f, 52g; 53d, 53e) des zu kalibrierenden Kunststoffprofils (50) kalibrieren, in fortlaufend näher zueinander kommender Weise (Q1, Q2, Q3) und daran anschließend in einen kalibrierenden Kanalbereich (36; 37c) zum Drücken des Vorsprung unter plastischer und/oder elastischer Verformung in die Ausnehmung zusammengeführt sind.

7. Verfahren zum Kalibrieren eines extrudierten Kunststoffprofilstrangs in ein kalibriertes Kunststoffprofil (50), das im kalibrierten Zustand wenigstens zwei komplementäre Elemente (51c, 52h, 52c, 52d; 52c, 51h, 51d, 51e; 51h, 51f, 51g, 52g; 52h, 52f, 52g, 51g, 53c, 53h, 53d, 53e) aufweist, die im Querschnitt senkrecht zu einer Längsrichtung des kalibrierten Kunststoffprofils (50) einen Formschluss bilden, mit den Schritten:
Einführen wenigstens eines extrudierten und zu kalibrierenden Kunststoffprofilstrangs in wenigstens einen Kanal (34, 35, 36; 37, 37a, 37b, 37c) eines Kalibratorkörpers (31) derart, dass sich der wenigstens eine zu kalibrierende Kunststoffprofilstrang in einer Bewegungsrichtung (F) von einer Eingangsseite (32) des Kalibratorkörpers (31) zu einer Ausgangsseite (33), die auf einer der Eingangsseite (32) in der Bewegungsrichtung (F) entgegengesetzten Seite des Kalibratorkörpers (31) angeordnet ist, durch den Kalibratorkörper (31) bewegen kann, und der wenigstens eine zu kalibrierende Kunststoffprofilstrang beim Einführen eine Querschnittsform senkrecht zu der Bewegungsrichtung (F) aufweist, in der die wenigstens zwei komplementären Elemente (51c, 52h, 52c, 52d; 52c, 51h, 51d, 51e; 51h, 51f, 51g, 52g; 52h, 52f, 52g, 51g; 53c, 53h, 53d, 53e) des zu kalibrierenden Kunststoffprofils (50) senkrecht zu der Bewegungsrichtung (F) getrennt sind und keinen Formschluss bilden,
Bewegen des zu kalibrierenden Kunststoffprofils in der Bewegungsrichtung (F) von der Eingangsseite (32) des Kalibratorkörpers (31) zu der Ausgangsseite (33) durch den wenigstens einen Kanal und Kalibrieren des Kunststoffprofilstrangs während dieser Bewegung, und
Ausgeben des kalibrierten Kunststoffprofils (50) an der zu der Ausgangsseite (33), bei dem,
während des Bewegens durch den wenigstens einen Kanal (34, 35, 36; 37, 37a, 37b, 37c), die die wenigstens zwei komplementären Elemente (51c, 52h, 52c, 52d; 52c, 51h, 51d, 51e; 51h, 51f, 51g, 52g; 52h, 52f, 52g, 51g; 53c, 53h, 53d, 53e) bildenden Abschnitte des extrudierten Kunststoffprofilstrangs entlang der Bewegungsrichtung (F) fortlaufend näher zueinander gebracht werden (Q1, Q2, Q3) und daran anschließend zusammengeführt werden (Q4) und dabei durch plastische und/oder elastische Verformung in den Formschluss gebracht werden, so dass die wenigstens zwei komplementäre Elemente (51c, 52h, 52c, 52d; 52c, 51h, 51d, 51e; 51h, 51f, 51g, 52g; 52h, 52f, 52g, 51g; 53c, 53h, 53d, 53e) beim Ausgeben im Querschnitt senkrecht zu der Längsrichtung des kalibrierten Kunststoffprofils (50) einen Formschluss bilden.

8. Verfahren nach Anspruch 7, bei dem
beim Einführen wenigstens zwei extrudierte Kunststoffprofilstränge in den wenigstens einen Kanal (34, 35, 36; 37, 37a, 37b, 37c) des Kalibratorkörpers (31) in wenigstens zwei voneinander getrennte Eingänge (34, 35) derart eingeführt werden, dass eines (51c; 51h, 51d, 51e; 51h, 51f, 51g; 51g) der wenigstens zwei komplementären Elemente des zu kalibrierenden Kunststoffprofils als Teil eines der wenigstens zwei extrudierte Kunststoffprofilstränge in einen (34) der getrennten Eingänge eintritt und ein anderes (52h, 52c, 52d; 52c; 52g; 52h, 52f, 52g) der wenigstens zwei komplementären Elemente der wenigstens zwei komplementären Elemente des zu kalibrierenden Kunststoffprofils als Teil eines anderen der wenigstens zwei extrudierte Kunststoffprofilstränge in einem anderen (35) der getrennten Eingänge in den Kanal eintritt und diese derart senkrecht zu der Bewegungsrichtung (F) getrennt sind und keinen Formschluss bilden.

9. Verfahren nach Anspruch 8, bei dem
die wenigstens zwei extrudierten Kunststoffprofilstränge beim Bewegen in der Bewegungsrichtung (F) von der Eingangsseite (32) des Kalibratorkörpers (31) zu der Ausgangsseite (33) zunächst durch zwei voneinander getrennte Kanalbereiche (34, 35) bewegt und dabei fortlaufend ohne Verformung der Querschnittsform senkrecht zu der Bewegungsrichtung (F) näher zueinander gebracht (Q1, Q2, Q3) und kalibriert werden und daran anschließend in einem Kanalbereich (36) zusammengeführt werden (Q4) und dabei durch elastische ohne plastische Verformung in den Formschluss gebracht werden, indem die Verformung durch Gestaltung der Kanalbereiche so begrenzt wird, dass eine elastische Verformung der bereits festen aber noch weichen komplementären Elemente ohne plastische Verformung erfolgt.

10. Verfahren nach Anspruch 8, bei dem
die wenigstens zwei extrudierten Kunststoffprofilstränge beim Bewegen in der Bewegungsrichtung (F) von der Eingangsseite (32) des Kalibratorkörpers (31) zu der Ausgangsseite (33) zunächst durch zwei voneinander getrennte Kanalbereiche (34, 35) bewegt und dabei fortlaufend unter Verformung der Querschnittsform senkrecht zu der Bewegungsrichtung (F) näher zueinander gebracht (Q1, Q2, Q3) und kalibriert werden und daran anschließend in einem Kanalbereich (36) zusammengeführt werden (Q4) und dabei durch plastische Verformung in den Formschluss gebracht werden, indem die Verformung durch Gestaltung der Kanalbereiche so gesteuert wird, dass eine plastische Verformung der bereits festen aber noch weichen komplementären Elemente erfolgt.

11. Verfahren nach Anspruch 7, bei dem
beim Einführen der wenigstens eine extrudierte Kunststoffprofilstrang in den wenigstens einen Kanal (34, 35, 36; 37, 37a, 37b, 37c) des Kalibratorkörpers (31) derart eingeführt werden, dass jeweils eines (53c; 53h, 53d, 53e) der wenigstens zwei komplementären Elemente (53c, 53h, 53d, 53e) des zu kalibrierenden Kunststoffprofils (50) in jeweils einem anderen Bereich (37a, 37b) desselben Eingangs räumlich getrennt in den Kanal eintritt.

12. Verfahren nach einem der Ansprüche 7 bis 11, bei dem
das zu kalibrierende Kunststoffprofil (50) im kalibrierten Zustand an der Ausgangsseite (33) wenigstens zwei komplementäre Elemente (51c, 52h, 52c, 52d; 52c, 51h, 51d, 51e; 51h, 51f, 51g, 52g; 52h, 52f, 52g, 51g; 53c, 53h, 53d, 53e) derart aufweist, dass das eine erste komplementäre Element ein Vorsprung (51c; 52c; 51g; 52g; 53c) mit einem Stamm und einem Kopf am freien Ende des Stamms ist, bei dem der Kopf im Querschnitt einen größeren Durchmesser als der Stamm ist, und das andere zweite komplementäre Element eine Ausnehmung (51h; 52h; 53h) ist, die im kalibrierten Zustand zur Aufnahme des Kopfes angepasst ist und von zwei seitlichen Wandelementen (52c, 52d; 51d, 51e; 51f, 51g; 52f, 52g; 53d, 53e), die vorzugsweise von Vorsprüngen gebildet werden, derart begrenzt wird, dass die Öffnung der Ausnehmung im Querschnitt einen Durchmesser aufweist, der größer als der Durchmesser des Stamms aber kleiner als der Durchmesser des Kopfes des ersten komplementären Elements ist, so dass ein im Querschnitt den Kopf in zwei entgegengesetzten Richtungen umschließender Formschluss der Ausnehmung mit dem Kopf besteht, und während des Bewegens durch den wenigstens einen Kanal (34, 35, 36; 37, 37a, 37b, 37c), die den Vorsprung (51c; 52c; 51g; 52g; 53c) und die Ausnehmung (51h; 52h; 53h) bildenden Abschnitte des extrudierten Kunststoffprofilstrangs entlang der Bewegungsrichtung (F) fortlaufend näher zueinander gebracht werden (Q1, Q2, Q3) und daran anschließend zusammengeführt werden (Q4) und dabei der Vorsprung (51c; 52c; 51g; 52g; 53c) unter plastischer und/oder elastischer Verformung des Kopfes und/oder der seitlichen Wandelemente (52c, 52d; 51d, 51e; 51f, 51g; 52f, 52g; 53d, 53e) in die Ausnehmung (51h; 52h; 53h) gedrückt wird.

13. Kalibriertes Kunststoffprofil (50), das sich einer Längsrichtung erstreckt und senkrecht zu der Längsrichtung eine Querschnittsform mit zwei getrennten kalibrierten Kunststoffprofilsträngen (51, 52) und vier komplementären Elementen (51c, 52h, 52d, 52e; 52c, 51h, 51d, 51e; 51h, 51f, 51g, 52g; 52h, 52f, 52g, 51g), von denen je zwei im Querschnitt einen Formschluss bilden, aufweist, bei dem
ein erstes komplementäres Element an einem ersten Kunststoffprofilstrang (51) der zwei getrennten Kunststoffprofilstränge als ein erster Vorsprung (51c; 51g) mit einem Stamm (51s) und einem Kopf (51k) am freien Ende des Stamms ausgebildet ist, bei dem der Kopf (51k) im Querschnitt einen größeren Durchmesser (51kd) als der Stamm (51sd) aufweist,
ein zweites komplementäres Element an einem zweiten Kunststoffprofilstrang (52) der zwei getrennten Kunststoffprofilstränge als eine erste Ausnehmung (52h) ausgebildet ist, die im kalibrierten Zustand zur Aufnahme des Kopfes (51k) des ersten Vorsprungs angepasst ist und von zwei seitlichen Wandelementen (52d, 52e; 52f, 52g) derart begrenzt wird, dass die Öffnung der ersten Ausnehmung (52h) im Querschnitt einen Durchmesser aufweist, der größer als der Durchmesser (51sd) des Stamms (51s) aber kleiner als der Durchmesser des Kopfes (51k) des ersten Vorsprungs (51c; 51g) ist, so dass ein im Querschnitt den Kopf in zwei entgegengesetzten Richtungen umschließender Formschluss der ersten Ausnehmung mit dem Kopf des ersten Vorsprungs besteht und die beiden getrennten Kunststoffprofilstränge (51, 52) so durch Formschluss zu einem Kunststoffprofil verbunden sind, und
ein drittes komplementäres Element an dem zweiten Kunststoffprofilstrang (52) als ein zweiter Vorsprung (52c; 52g) mit einem Stamm und einem Kopf am freien Ende des Stamms ausgebildet ist, bei dem der Kopf im Querschnitt einen größeren Durchmesser als der Stamm aufweist,
ein viertes komplementäres Element an dem ersten Kunststoffprofilstrang (51) als eine zweite Ausnehmung (51h) ausgebildet ist, die im kalibrierten Zustand zur Aufnahme des Kopfes des zweiten Vorsprungs (52c; 52g) angepasst ist und von zwei seitlichen Wandelementen (51d, 51e; 51f, 51g) derart begrenzt wird, dass die Öffnung (51o) der zweiten Ausnehmung (51h) im Querschnitt einen Durchmesser (51od) aufweist, der größer als der Durchmesser des Stamms aber kleiner als der Durchmesser des Kopfes des zweiten Vorsprungs (52c; 52g) ist, so dass ein im Querschnitt den Kopf in zwei entgegengesetzten Richtungen umschließender Formschluss der zweiten Ausnehmung mit dem Kopf des zweiten Vorsprungs besteht und die beiden getrennten Kunststoffprofilstränge (51, 52) so durch Formschluss zu einem Kunststoffprofil verbunden sind,
bei dem die Vorsprünge (51c; 52c; 51g, 52g) und die Ausnehmungen (51h; 52h) so ausgebildet sind, dass die zwei getrennten kalibrierten Kunststoffprofilstränge (51, 52) bei Raumtemperatur in der Längsrichtung relativ zueinander verschiebbar sind,
**dadurch gekennzeichnet,**
**dass** bei dem ersten Vorsprung (51c; 51g) der Kopf (51k) im Querschnitt einen Durchmesser (51kd), der wenigstens 2-mal größer als ein Durchmesser (51sd) des Stamms (51s) ist, aufweist,
**dass** bei der ersten Ausnehmung (52h) die Öffnung im Querschnitt einen Durchmesser aufweist, der 5% bis 50% größer als der Durchmesser (51sd) des Stamms (51s) des ersten Vorsprungs ist,
**dass** bei dem zweiten Vorsprung (52c; 52g) der Kopf (52k) im Querschnitt einen Durchmesser (52kd), der wenigstens 2-mal größer als ein Durchmesser (52sd) des Stamms (52s) ist, aufweist,
**dass** bei der zweiten Ausnehmung (51h) die Öffnung im Querschnitt einen Durchmesser aufweist, der 5% bis 50% größer als der Durchmesser (52sd) des Stamms (52s) des zweiten Vorsprungs ist,
**dass** der Formschluss der vier komplementären Elemente (51c, 52h, 52d, 52e; 52c, 51h, 51d, 51e; 51h, 51f, 51g, 52g; 52h, 52f, 52g, 51g) bei Raumtemperatur durch Anlegen einer Kraft in jeder zu der Längsrichtung senkrechten Richtung, deren Betrag kleiner als oder gleich 300 N pro 2 cm Länge des Kunststoffprofils (50) ist, nicht trennbar ist.

14. Kalibriertes Kunststoffprofil (50) nach Anspruch 13, bei dem
der erste Vorsprung (51g) eines der beiden seitlichen Wandelemente (51f, 51g) bildet, die die zweite Ausnehmung (51h) begrenzen,
der zweite Vorsprung (52g) eines der beiden seitlichen Wandelemente (52f, 52g) bildet, die die erste Ausnehmung (52h) begrenzen, und

15. Kalibriertes Kunststoffprofil (50) nach Anspruch 13 oder 14, bei dem
das kalibrierte Kunststoffprofil aus Polyamid mit Glasfaserverstärkung ausgebildet ist und der Formschluss der vier komplementären Elemente (51g, 52h, 52f, 52g; 51h, 51f, 51g, 52g) bei Raumtemperatur durch Anlegen einer Kraft in jeder zu der Längsrichtung senkrechten Richtung, deren Betrag kleiner als oder gleich 500 N pro 2 cm Länge des Kunststoffprofils (50) ist, nicht trennbar ist.

## Claims

1. Calibration device (30) for an extruded plastic profile strand for calibrating the extruded plastic profile strand into a calibrated plastic profile (50) comprising
a calibrator body (31) with at least one channel (34, 35, 36; 37, 37a, 37b, 37c), which extends in a movement direction (F) and has at least one inlet and one outlet and has a cross-sectional shape perpendicular to the movement direction (F) at the outlet, which corresponds to the calibrated external cross-section of the plastic profile (50) to be calibrated,
**characterized**
**in that** the calibrated plastic profile (50) comprises at least two complementary elements (51c, 52h, 52c, 52d; 52c, 51h, 51d, 51e; 51h, 51f, 51g, 52g; 52h, 52f, 52g, 51g; 53c, 53h, 53d, 53e) in the calibrated state on the output side (33), which complementary elements form a form fit in the cross section perpendicular to the movement direction (F), and
**in that** the at least one channel (34, 35, 36; 37, 37a, 37b, 37c) has a cross-sectional shape perpendicular to the movement direction (F) at the inlet in which the at least two complementary elements (51c, 52h, 52c, 52d; 52c, 51h, 51d, 51e; 51h, 51f, 51g, 52g; 52h, 52f, 52g, 51g; 53c, 53h, 53d, 53e) of the plastic profile (50) to be calibrated are separated perpendicular to the movement direction (F) and do not form a positive fit, and
**in that** the at least one channel (34, 35, 36; 37, 37a, 37b, 37c) is designed from the inlet to the outlet such that the at least two complementary elements (51c, 52h, 52c, 52d; 52c, 51h, 51d, 51e; 51h, 51f, 51g, 52g; 52h, 52f, 52g, 51g; 53c, 53h, 53d, 53e) of the at least one channel are formed along the movement direction (F) in a manner (Q1, Q2, Q3) bringing them progressively closer to each other and then together into one calibrating channel region (36; 37c) in such a way that the sections of the extruded plastic profile strand forming the at least two complementary elements (51c, 52h, 52c, 52d; 52c, 51h, 51d, 51e; 51h, 51f, 51g, 52g; 52h, 52f, 52g, 51f; 53c, 53h, 53d, 53e) are brought into form fit at the outlet by plastic and/or elastic deformation.

2. Calibration device according to claim 1, wherein
the at least one channel (34, 35, 36) comprises the (first) cross-sectional shape perpendicular to the movement direction (F) on the side of the at least one inlet such that at least two separate inlets (34, 35) are formed such that one (51c; 51h, 51d, 51e; 51h, 51f, 51g; 51g) of the at least two complementary elements of the plastic profile to be calibrated can enter the channel in one (34) of the separate inlets and another one (52h, 52c, 52d) of the at least two complementary elements of the plastic profile (50) to be calibrated can enter the channel in another one (35) of the separate inlets; 52c; 52g; 52h, 52f, 52g), and comprises the (second) cross-sectional shape (36) on the outlet side which corresponds to the calibrated external cross-section of the plastic profile to be calibrated.

3. Calibration device according to claim 1, wherein
the at least one channel (37, 37a, 37b, 37c) comprises the (first) cross-sectional shape perpendicular to the movement direction (F) on the side of the at least one inlet in such a way that one inlet (37, 37a, 37b, 37c) is formed in such a way that each one (53c; 53h, 53d, 53e) of the at least two complementary elements of the plastic profile (50) to be calibrated can enter the channel spatially separated each in another area (37a, 37b) of the same inlet, and comprises the (second) cross-sectional shape (37c) on the side of the outlet which corresponds to the calibrated outer cross-section of the plastic profile (50) to be calibrated.

4. Calibration device (30) according to one of the claims 1 to 3, wherein
the calibrator body (31) has an input side (32) and an output side (33), which is arranged on a side of the calibrator body (31) opposite the input side (32) in a movement direction (F), and the at least one channel (34, 35, 36; 37, 37a, 37b, 37c) extends from the input side (32) to the output side (33) and has a first cross-sectional shape perpendicular to the movement direction (F) on the input side (32), in which the at least two complementary elements (51c, 52h, 52c, 52d; 52c, 51h, 51d, 51e; 51h, 51f, 51g, 52g; 52h, 52f, 52g, 51g; 53c, 53h, 53d, 53e) of the plastic profile (50) to be calibrated are separated perpendicular to the movement direction (F) and do not form a positive fit, and on the output side (33) has a second cross-sectional shape perpendicular to the movement direction (F) on the output side (33), which corresponds to the calibrated outer cross-section of the plastic profile (50) to be calibrated,
the channel regions of the at least one channel which calibrate the at least two complementary elements (51c, 52h, 52c, 52d; 52c, 51h, 51d, 51e; 51h, 51f, 51g, 52g; 52h, 52f, 52g, 51g; 53c, 53h, 53d, 53e) of the plastic profile (50) to be calibrated comprise in a region along the movement direction (F) in which the sections of the extruded plastic profile strand forming the at least two complementary elements (51c, 52h, 52c, 52d; 52c, 51h, 51d, 51e; 51h, 51f, 51g, 52g; 52h, 52f, 52g, 51g; 53c, 53h, 53d, 53e) are brought into a form fit by plastic and/or elastic deformation, an overmeasure relative to the added dimensions of the at least two complementary elements (51c, 52h, 52c, 52d; 52c, 51h, 51d, 51e; 51h, 51f, 51g, 52g; 52h, 52f, 52g, 51g; 53c, 53h, 53d, 53e) of the extruded plastic profile strand.

5. Calibration device (30) according to one of the claims 1 to 4, wherein
the calibrator body (31) has cooling channels (31k), preferably at least one of which extends between channel regions which come continuously closer to one another, and/or the at least one channel (34, 35, 36; 37, 37a, 37b, 37c) is designed in such a way that the extruded plastic profile strand can be moved in the movement direction (F) through the calibrator body (31) by drawing the calibrated plastic profile (50) downstream of the outlet.

6. Calibration device (30) according to one of the claims 1 to 5, wherein
the plastic profile (50) to be calibrated comprises at least two complementary elements (51c, 52h, 52c, 52d; 52c, 51h, 51d, 51e; 51h, 51f, 51g, 52g; 52h, 52f, 52g, 51g; 53c, 53h, 53d, 53e) on the output side (33) in the calibrated state such that the one first complementary element is a protrusion (51c; 52c; 51g; 52g; 53c) with a stem (51s; 52s) and a head (51k; 52k) at the free end of the stem (51s; 52s), wherein the head (51k; 52k) has a larger diameter (51kd; 52kd) in cross section than the stem, and that the other second complementary element is a recess (51h; 52h; 53h) which, in the calibrated state, is adapted to receive the head (52k; 51k) and is delimited by two lateral wall elements (52c, 52d; 51d, 51e; 51f, 51g; 52f, 52g; 53d, 53e), which are preferably formed by protrusions, such that the opening (51o; 52o) of the recess has a diameter (51od; 52od) in cross section which is greater than the diameter (52sd; 51sd) of the stem (52s; 51s) but smaller than the diameter (52kd; 51kd) of the head (52k; 51k) of the first complementary element, such that there is a form fit of the recess (51h; 52h; 52h) with the head (52k; 51k) in cross section enclosing the head in two opposite directions, and
the at least one channel (34, 35, 36; 37, 37a, 37b, 37c) is formed from the inlet to the outlet such that the channel regions of the at least one channel which calibrate the protrusion (51c; 52c; 51g; 52g; 53c) and the lateral wall elements (52c, 52d; 51d, 51e; 51f, 51g; 52f, 52g; 53d, 53e) delimiting the recess (51h; 52h; 53h) of the plastic profile (50) to be calibrated, are designed to continuously approach each other (Q1, Q2, Q3) and then brought together in one calibrating channel region (36; 37c) for pressing the protrusion into the recess under plastic and/or elastic deformation.

7. Method for calibrating an extruded plastic profile strand into a calibrated plastic profile (50) which, in the calibrated state, comprises at least two complementary elements (51c, 52h, 52c, 52d; 52c, 51h, 51d, 51e; 51h, 51f, 51g, 52g; 52h, 52f, 52g, 51g; 53c, 53h, 53d, 53e) which, in cross section perpendicular to a longitudinal direction of the calibrated plastic profile (50), form a form fit, comprising the steps:
inserting at least one extruded plastic profile strand to be calibrated into at least one channel (34, 35, 36; 37, 37a, 37b, 37c) of a calibrator body (31) in such a way that the at least one plastic profile strand to be calibrated can move in a movement direction (F) from an input side (32) of the calibrator body (31) to an output side (33), which is arranged on a side of the calibrator body (31) opposite the input side (32) in the movement direction (F), through the calibrator body (31), and that the at least one plastic profile strand to be calibrated has, upon insertion, a cross-sectional shape perpendicular to the movement direction (F), in which the at least two complementary elements (51c, 52h, 52c, 52d; 52c, 51h, 51d, 51e; 51h, 51f, 51g, 52g; 52h, 52f, 52g, 51g; 53c, 53h, 53d, 53e) of the plastic profile (50) to be calibrated are separated perpendicular to the movement direction (F) and do not form a form fit;
moving the plastic profile strand to be calibrated in the movement direction (F) from the input side (32) of the calibrator body (31) to the output side (33) through the at least one channel and calibrating the plastic profile strand during this movement; and
outputting the calibrated plastic profile (50) at the output side (33),
wherein,
while moving through the at least one channel (34, 35, 36; 37, 37a, 37b, 37c),
the sections of the extruded plastic profile strand forming the at least two complementary elements (51c, 52h, 52c, 52d; 52c, 51h, 51d, 51e; 51h, 51f, 51g, 52g; 52h, 52f, 52g, 51g; 53c, 53h, 53d, 53e) are continuously brought closer to each other (Q1, Q2, Q3) along the movement direction (F) and then brought together (Q4) and thereby brought into a form fit by plastic and/or elastic deformation, so that the at least two complementary elements (51c, 52h, 52c, 52d; 52c, 51h, 51d, 51e; 51h, 51f, 51g, 52g; 52h, 52f, 52g, 51g; 53c, 53h, 53d, 53e) form a positive fit in the cross section perpendicular to the longitudinal direction of the calibrated plastic profile (50).

8. The method according to claim 7, wherein
in the inserting step, at least two extruded plastic profile strands are inserted into at least one channel (34, 35, 36; 37, 37a, 37b, 37c) of the calibrator body (31) in at least two separate inlets (34, 35) in such a way that one (51c; 51h, 51d, 51e; 51h, 51f, 51g; 51g) of the at least two complementary elements of the plastic profile to be calibrated enters into one (34) of the separate inlets as part of one of the at least two extruded plastic profile strands and another one (52h, 52c, 52d; 52c; 52g; 52h, 52f, 52g) of the at least two complementary elements of the plastic profile strand to be calibrated enters the channel in another one (35) of the separate inlets and these are thus separated perpendicular to the movement direction (F) and do not form a form fit.

9. The method according to claim 8, wherein
the at least two extruded plastic profile strands, when moving in the movement direction (F) from the input side (32) of the calibrator body (31) to the output side (33), are first moved through two channel regions (34, 35) which are separate from each other and are brought closer to each other (Q1, Q2, Q3) and calibrated and then brought together (Q4) in one channel region (36) and thereby brought into the form fit by elastic deformation without plastic deformation, in that the deformation is limited by the design of the channel regions in such a way that elastic deformation of the already firm but still soft complementary elements takes place without plastic deformation.

10. The method according to claim 8, wherein
the at least two extruded plastic profile strands, when moving in the movement direction (F) from the input side (32) of the calibrator body (31) to the output side (33), are first moved through two channel regions (34, 35) which are separate from each other andare thereby continuously brought closer together (Q1, Q2, Q3) under deformation and calibrated and then brought together (Q4) in one channel region (36) and thereby brought into the form fit by plastic deformation, in that the deformation is controlled by the design of the channel regions in such a way that plastic deformation of the already firm but still soft complementary elements takes place.

11. The method according to claim 7, wherein
in the inserting step, the at least one extruded plastic profile strand is inserted into the at least one channel (34, 35, 36; 37, 37a, 37b, 37c) of the calibrator body (31) in such a way that each one (53c; 53h, 53d, 53e) of the at least two complementary elements (53c, 53h, 53d, 53e) of the plastic profile (50) to be calibrated enters the channel in a different region (37a, 37b) of the same inlet in a spatially separated manner.

12. The method according to any one of claims 7 to 11, wherein
the plastic profile (50) to be calibrated comprises at least two complementary elements (51c, 52h, 52c, 52d; 52c, 51h, 51d, 51e; 51h, 51f, 51g, 52g; 52h, 52f, 52g, 51g; 53c, 53h, 53d, 53e) on the output side (33) in the calibrated state such that the one first complementary element is a protrusion (51c; 52c; 51g; 52g; 53c) with a stem and a head at the free end of the stem, wherein the head has a larger diameter in cross section than the stem, and that the other second complementary element is a recess (51h; 52h; 53h) which, in the calibrated state, is adapted to receive the head and is surrounded by two lateral wall elements (52c, 52d; 51d, 51e; 51f, 51g; 52f, 52g; 53d, 53e), which are preferably formed by protrusions, such that the opening of the recess has a diameter in cross section which is larger than the diameter of the stem but smaller than the diameter of the head of the first complementary element, so that in cross section there is a form fit of the recess with the head enclosing the head in two opposite directions, and
while moving through the at least one channel (34, 35, 36; 37, 37a, 37b, 37c),
the sections of the extruded plastic profile strand forming the protrusion (51c; 52c; 51g; 52g; 53c) and the recess (51h; 52h; 53h) are continuously brought closer to other (Q1, Q2, Q3) along the movement direction (F) and are subsequently brought together (Q4) and thereby the protrusion (51c; 52c; 51g; 52g; 53c) is pressed into the recess (51h; 52h; 53h) with plastic and/or elastic deformation of the head and/or the lateral wall elements (52c, 52d; 51d, 51e; 51f, 51g; 52f, 52g; 53d, 53e).

13. Calibrated plastic profile (50) extending in a longitudinal direction and having a cross-sectional shape perpendicular to the longitudinal direction and comprising two separate calibrated plastic profile strands (51, 52) and four complementary elements (51c, 52h, 52d, 52e; 52c, 51h, 51d, 51e; 51h, 51f, 51g, 52g; 52h, 52f, 52g, 51g), of which pairs of two each form a form fit in cross section, wherein
a first complementary element on a first plastic profile strand (51) of the two separate plastic profile strands is formed as a first protrusion (51c; 51g) with a stem (51s) and a head (51k) at the free end of the stem, in which the head (51k) has a larger diameter (51kd) in cross section than the stem (51sd),
a second complementary element on a second plastic profile strand (52) of the two separate plastic profile strands is formed as a first recess (52h) which, in the calibrated state, is adapted to receive the head (51k) of the first protrusion and is delimited by two lateral wall elements (52d, 52e; 52f, 52g) in such a way that the opening of the first recess (52h) has a diameter in cross section which is larger than the diameter (51sd) of the stem (51s) but smaller than the diameter of the head (51k) of the first protrusion (51c; 51g), so that there is a form fit of the first recess with the head of the first protrusion enclosing the head in two opposite directions in cross section and the two separate plastic profile strands (51, 52) are thus connected by form fit to form a plastic profile, and
a third complementary element on the second plastic profile strand (52) is formed as a second protrusion (52c; 52g) with a stem and a head at the free end of the stem, in which the head has a larger diameter in cross section than the stem,
a fourth complementary element on the first plastic profile strand (51) is formed as a second recess (51h) which, in the calibrated state, is adapted to receive the head of the second protrusion (52c; 52g) and is delimited by two lateral wall elements (51d, 51e; 51f, 51g) in such a way that the opening (51o) of the second recess (51h) has a diameter (51od) in cross section which is larger than the diameter of the stem but smaller than the diameter of the head of the second protrusion (52g), so that there is a form fit of the second recess with the head of the second protrusion enclosing the head in two opposite directions in cross section and the two separate plastic profile strands (51, 52) are thus connected by form fit to form a plastic profile,
in which the protrusions (51c; 52c; 51g; 52g) and the recesses (51h; 52h) are designed in such a way that the two separate calibrated plastic profile strands (51, 52) can be displaced relative to one another in the longitudinal direction at room temperature,
**characterized**
**in that**, in the first protrusion (51c; 51g), the head (51k) comprises a diameter (51kd) in cross section that is at least 2 times larger than a diameter (51sd) of the stem (51s),
**in that**, in the first recess (52h), the opening comprises a diameter in cross section that is 5 to 50 % larger that the diameter (51sd) of the stem (51s) of the first protrusion,
**in that**, in the second protrusion (52c; 52g), the head (52k) comprises a diameter (52kd) in cross section that is at least 2 times larger than a diameter (52sd) of the stem (52s),
**in that**, in the second recess (51h), the opening comprises a diameter in cross section that is 5 to 50 % larger that the diameter (52sd) of the stem (52s) of the second protrusion,
**in that** the form fit of the four complementary elements (51c, 52h, 52d, 52e; 52c, 51h, 51d, 51e; 51h, 51f, 51g, 52g; 52h, 52f, 52g, 51g) cannot be separated at room temperature by applying a force in any direction perpendicular to the longitudinal direction, the amount of which force is less than or equal to 300 N per 2 cm length of the plastic profile (50).

14. Calibrated plastic profile (50) according to claim 13, wherein
the first protrusion (51g) forms one of the two lateral wall elements (51f, 51g) which delimit the second recess (51h), and
the second protrusion (52g) forms one of the two lateral wall elements (52f, 52g) which delimit the first recess (52h).

15. Calibrated plastic profile (50) according to claim 13 or 14, wherein
the calibrated plastic profile is formed of polyamide with glass fibre reinforcement and the form fit of the four complementary elements (51g, 52h, 52f, 52g; 51h, 51f, 51g, 52g) cannot be separated at room temperature by applying a force in any direction perpendicular to the longitudinal direction, the amount of which force is less than or equal to 500 N per 2 cm length of the plastic profile (50).

## Revendications

1. Dispositif de calibrage (30) pour un fil de profilé en plastique extrudé permettant de calibrer ledit fil de profilé en plastique extrudé en un profilé en plastique (50) calibré, comprenant
un corps de calibrage (31) doté d'au moins un canal (34, 35, 36; 37, 37a, 37b, 37c) s'étendant dans une direction de déplacement (F), comportant au moins une entrée et une sortie, et présentant à la sortie une forme de section transversale perpendiculaire à la direction de déplacement (F) correspondant à la section extérieure calibrée du profilé en plastique (50) à calibrer,
**caractérisé**
**en ce que** le profilé en plastique (50) à calibrer présente, à l'état calibré, sur le côté sortie (33), au moins deux éléments complémentaires (51c, 52h, 52c, 52d; 52c, 51h, 51d, 51e; 51h, 51f, 51g, 52g; 52h, 52f, 52g, 51g; 53c, 53h, 53d, 53e) qui, en coupe transversale perpendiculairement à la direction de déplacement (F), forment un ajustement de forme, et
**en ce que** ledit au moins un canal (34, 35, 36; 37, 37a, 37b, 37c) présente, à l'entrée, une forme de section transversale perpendiculaire à la direction de déplacement (F) dans laquelle lesdits au moins deux éléments complémentaires (51c, 52h, 52c, 52d; 52c, 51h, 51d, 51e; 51h, 51f, 51g, 52g; 52h, 52f, 52g, 51g; 53c, 53h, 53d, 53e) du profilé en plastique (50) à calibrer sont séparés perpendiculairement à la direction de déplacement (F) et ne forment pas d'ajustement de forme, et
**en ce que** ledit au moins un canal (34, 35, 36; 37, 37a, 37b, 37c) est conçu de l'entrée à la sortie de sorte que lesdits au moins deux éléments complémentaires (51c, 52h, 52c, 52d; 52c, 51h, 51d, 51e; 51h, 51f, 51g, 52g; 52h, 52f, 52g, 51g; 53c, 53h, 53d, 53e) de l'au moins un canal sont conçus de manière a se rapprocher progressivement (Q1, Q2, Q3) dans la direction de déplacement (F) et à être ensuite réunis dans une zone de canal de calibrage (36; 37c), de manière à ce que les sections formant lesdits au moins deux éléments complémentaires (51c, 52h, 52c, 52d; 52c, 51h, 51d, 51e; 51h, 51f, 51g, 52g; 52h, 52f, 52g, 51f; 53c, 53h, 53d, 53e) du fil de profilé en plastique extrudé soient amenées à la sortie dans l'ajustement de forme par déformation plastique et/ou élastique.

2. Dispositif de calibrage selon la revendication 1, dans lequel
ledit au moins un canal (34, 35, 36) présente, du côté de ladite au moins une entrée, la (première) forme de section transversale perpendiculaire à la direction de déplacement (F) de telle sorte qu'au moins deux entrées séparées (34, 35) l'une de l'autre sont formées, de manière à permettre à l'un (51c; 51h, 51d, 51e; 51h, 51f, 51g; 51g) desdits au moins deux éléments complémentaires du profilé en plastique à calibrer d'entrer dans le canal par l'une (34) des entrées séparées, et à un autre (52h, 52c, 52d; 52c; 52g; 52h, 52f, 52g) desdits au moins deux éléments complémentaires (50) d'entrer dans le canal par une autre (35) des entrées séparées, et présentant, du côté de la sortie, la (deuxième) forme de section transversale (36) correspondant à la section extérieure calibrée du profilé en plastique à calibrer.

3. Dispositif de calibrage selon la revendication 1, dans lequel
ledit au moins un canal (37, 37a, 37b, 37c) présente, du côté de ladite au moins une entrée, la (première) forme de section transversale perpendiculaire à la direction de déplacement (F) de telle sorte qu'une entrée (37, 37a, 37b, 37c) est formée de manière à permettre à chacun (53c; 53h, 53d, 53e) desdits au moins deux éléments complémentaires du profilé en plastique (50) à calibrer d'entrer dans le canal dans une zone (37a, 37b) distincte respective de la même entrée, de manière spatialement séparée, et présentant, du côté de la sortie, la (deuxième) forme de section transversale (37c) correspondant à la section extérieure calibrée du profilé en plastique (50) calibré.

4. Dispositif de calibrage (30) selon l'une quelconque des revendications 1 à 3, dans lequel
le corps de calibrage (31) comprend un côté entrée (32) et un côté sortie (33), ce dernier étant disposé sur une face du corps de calibrage (31) opposée au côté entrée (32) dans la direction de déplacement (F), ledit au moins un canal (34, 35, 36; 37, 37a, 37b, 37c) s'étend du côté entrée (32) au côté sortie (33) et présente, au niveau du côté entrée (32), une première forme de section transversale perpendiculaire à la direction de déplacement (F), dans laquelle lesdits au moins deux éléments complémentaires (51c, 52h, 52c, 52d; 52c, 51h, 51d, 51e; 51h, 51f, 51g, 52g; 52h, 52f, 52g, 51g; 53c, 53h, 53d, 53e) du profilé en plastique (50) à calibrer sont séparés perpendiculairement à la direction de déplacement (F) et ne forment pas d'ajustement de forme, et au niveau du côté sortie (33), une deuxième forme de section transversale perpendiculaire à la direction de déplacement (F) correspondant à la section extérieure calibrée du profilé en plastique (50) à calibrer,
les zones de canal dudit au moins un canal, qui calibrent lesdits au moins deux éléments complémentaires (51c, 52h, 52c, 52d; 52c, 51h, 51d, 51e; 51h, 51f, 51g, 52g; 52h, 52f, 52g, 51g; 53c, 53h, 53d, 53e) du profilé en plastique (50) à calibrer, présentent, dans une section le long de la direction de déplacement (F) où les sections formant lesdits au moins deux éléments complémentaires (51c, 52h, 52c, 52d; 52c, 51h, 51d, 51e; 51h, 51f, 51g, 52g; 52h, 52f, 52g, 51g; 53c, 53h, 53d, 53e) du fil de profilé en plastique extrudé sont amenées dans l'ajustement de forme par déformation plastique et/ou élastique, un surdimensionnement par rapport aux dimensions additionnées des sections formant lesdits au moins deux éléments complémentaires (51c, 52h, 52c, 52d; 52c, 51h, 51d, 51e; 51h, 51f, 51g, 52g; 52h, 52f, 52g, 51g; 53c, 53h, 53d, 53e) du fil de profilé en plastique extrudé.

5. Dispositif de calibrage (30) selon l'une quelconque des revendications 1 à 4, dans lequel
le corps de calibrage (31) comprend des canaux de refroidissement (31k), dont au moins un s'étend de préférence entre des zones de canal qui se rapprochent progressivement l'une de l'autre, et/ou
ledit au moins un canal (34, 35, 36; 37, 37a, 37b, 37c) est conçu de telle sorte que le fil de profilé en plastique extrudé puisse être déplacé dans la direction de déplacement (F) à travers le corps de calibrage (31) par traction sur le profilé en plastique (50) calibré en aval de la sortie.

6. Dispositif de calibrage (30) selon l'une quelconque des revendications 1 à 5, dans lequel
le profilé en plastique (50) à calibrer présente, à l'état calibré, sur le côté sortie (33), au moins deux éléments complémentaires (51c, 52h, 52c, 52d; 52c, 51h, 51d, 51e; 51h, 51f, 51g, 52g; 52h, 52f, 52g, 51g; 53c, 53h, 53d, 53e), de sorte que l'un, premier, élément complémentaire est une saillie (51c; 52c; 51g; 52g; 53c) comportant une tige (51s; 52s) et une tête (51k; 52k) à l'extrémité libre de la tige (51s; 52s), la tête (51k; 52k) présentant, en coupe transversale, un diamètre (51kd; 52kd) supérieur à celui de la tige, et que l'autre, deuxième, élément complémentaire est une cavité (51h; 52h; 53h) conçue, à l'état calibré, pour recevoir la tête (52k; 51k), et limitée par deux éléments de paroi latéraux (52c, 52d; 51d, 51e; 51f, 51g; 52f, 52g; 53d, 53e), de préférence sous forme de saillies, de sorte que l'ouverture (51o; 52o) de la cavité présente, en coupe transversale, un diamètre (51od; 52od) supérieur au diamètre (52sd; 51sd) de la tige (52s; 51s) mais inférieur au diamètre (52kd; 51kd) de la tête (52k; 51k) du premier élément complémentaire, établissant ainsi un ajustement de forme de la cavité (51h; 52h; 52h) avec la tête (52k; 51k) en coupe transversale entourant la tête dans deux directions opposées, et
ledit au moins un canal (34, 35, 36; 37, 37a, 37b, 37c) est conçu de telle sorte de l'entrée à la sortie que les zones de canal dudit au moins un canal calibrant la saillie (51c; 52c; 51g; 52g; 53c) et les éléments de paroi latéraux (52c, 52d; 51d, 51e; 51f, 51g; 52f, 52g; 53d, 53e) du profilé en plastique (50) à calibrer limitant la cavité (51h; 52h; 53h), se rapprochent progressivement (Q1, Q2, Q3) et sont ensuite réunies dans une zone de canal de calibrage (36; 37c) permettant d'enfoncer la saillie sous déformation plastique et/ou élastique dans la cavité.

7. Procédé de calibrage d'un fil de profilé en plastique extrudé en un profilé en plastique (50) calibré, lequel présente, à l'état calibré, au moins deux éléments complémentaires (51c, 52h, 52c, 52d; 52c, 51h, 51d, 51e; 51h, 51f, 51g, 52g; 52h, 52f, 52g, 51g; 53c, 53h, 53d, 53e) qui, en coupe transversale perpendiculairement à une direction longitudinale du profilé en plastique (50) calibré, forment un ajustement de forme, comprenant les étapes suivantes :
introduction d'au moins un fil de profilé en plastique extrudé et à calibrer dans au moins un canal (34, 35, 36; 37, 37a, 37b, 37c) d'un corps de calibrage (31), de telle sorte que ledit au moins un fil de profilé en plastique à calibrer puisse se déplacer à travers le corps de calibrage (31), dans une direction de déplacement (F) d'un côté entrée (32) du corps de calibrage (31) vers un côté sortie (33) disposé sur une face du corps de calibrage (31) opposée au côté entrée (32) dans la direction de déplacement (F), et que, lors de son introduction, ledit au moins fil de un profilé en plastique à calibrer présente une forme de section transversale perpendiculaire à la direction de déplacement (F) dans laquelle lesdits au moins deux éléments complémentaires (51c, 52h, 52c, 52d; 52c, 51h, 51d, 51e; 51h, 51f, 51g, 52g; 52h, 52f, 52g, 51g; 53c, 53h, 53d, 53e) du profilé en plastique (50) à calibrer sont séparés perpendiculairement à la direction de déplacement (F) et ne forment pas d'ajustement de forme,
déplacement du profilé en plastique à calibrer dans la direction de déplacement (F), du côté entrée (32) du corps de calibrage (31) vers le côté sortie (33), à travers ledit au moins un canal, et calibrage du fil de profilé en plastique au cours de ce déplacement, et
sortie du profilé en plastique (50) calibré au niveau du côté sortie (33),
dans lequel, lors du déplacement à travers ledit au moins un canal (34, 35, 36; 37, 37a, 37b, 37c), les sections du fil de profilé en plastique extrudé formant lesdits au moins deux éléments complémentaires (51c, 52h, 52c, 52d; 52c, 51h, 51d, 51e; 51h, 51f, 51g, 52g; 52h, 52f, 52g, 51g; 53c, 53h, 53d, 53e) sont progressivement rapprochées (Q1, Q2, Q3) l'une de l'autre dans la direction de déplacement (F), puis réunies (Q4) et amenées dans l'ajustement de forme par déformation plastique et/ou élastique, de telle sorte que lesdits au moins deux éléments complémentaires (51c, 52h, 52c, 52d; 52c, 51h, 51d, 51e; 51h, 51f, 51g, 52g; 52h, 52f, 52g, 51g; 53c, 53h, 53d, 53e) forment un ajustement de forme, en coupe transversale perpendiculairement à la direction longitudinale du profilé en plastique (50) calibré, lors de leur sortie.

8. Procédé selon la revendication 7, dans lequel
lors de l'introduction, au moins deux fils de profilé en plastique extrudés sont introduits dans ledit au moins un canal (34, 35, 36; 37, 37a, 37b, 37c) du corps de calibrage (31) via au moins deux entrées (34, 35) séparées l'une de l'autre, de telle sorte que l'un (51c; 51h, 51d, 51e; 51h, 51f, 51g; 51g) desdits au moins deux éléments complémentaires du profilé en plastique à calibrer entre dans l'une (34) des entrées séparées en tant que partie de l'un desdits au moins deux fils de profilé en plastique extrudés, tandis qu'un autre (52h, 52c, 52d; 52c; 52g; 52h, 52f, 52g) desdits au moins deux éléments complémentaires des au moins deux éléments complémentaires du profilé en plastique à calibrer entre dans une autre (35) des entrées séparées en tant que partie d'un autre desdits au moins deux fils de profilé en plastique extrudés, lesdits éléments complémentaires étant ainsi séparés perpendiculairement à la direction de déplacement (F) et ne formant pas d'ajustement de forme.

9. Procédé selon la revendication 8, dans lequel
lesdits au moins deux fils de profilé en plastique extrudés, lors de leur déplacement dans la direction de déplacement (F) du côté entrée (32) du corps de calibrage (31) vers le côté sortie (33), sont d'abord déplacés à travers deux zones de canal (34, 35) séparées l'une de l'autre, et sont progressivement rapprochés (Q1, Q2, Q3) sans déformation de leur forme de section transversale perpendiculairement à la direction de déplacement (F), et calibrés, et ensuite, ils sont réunis (Q4) dans une zone de canal (36) et amenés dans l'ajustement de forme par déformation élastique sans déformation plastique, la conception des zones de canal limitant la déformation de sorte que les éléments complémentaires, déjà solides mais encore souples, subissent une déformation élastique sans déformation plastique.

10. Procédé selon la revendication 8, dans lequel
lesdits au moins deux fils de profilé en plastique extrudés, lors de leur déplacement dans la direction de déplacement (F), du côté entrée (32) du corps de calibrage (31) vers le côté sortie (33), sont d'abord déplacés à travers deux zones de canal (34, 35) séparées l'une de l'autre, et sont progressivement rapprochés (Q1, Q2, Q3) sous déformation de leur forme de section transversale perpendiculairement à la direction de déplacement (F), puis calibrés, et ensuite, ils sont réunis (Q4) dans une zone de canal (36) et amenés dans un ajustement de forme par déformation plastique, la déformation étant contrôlée par la conception des zones de canal de sorte que les éléments complémentaires, déjà solides mais encore souples, subissent une déformation plastique.

11. Procédé selon la revendication 7, dans lequel
lors de l'introduction, ledit au moins un fil de profilé en plastique extrudé est introduit dans ledit au moins un canal (34, 35, 36; 37, 37a, 37b, 37c) du corps de calibrage (31) de telle sorte que chacun (53c; 53h, 53d, 53e) desdits au moins deux éléments complémentaires (53c, 53h, 53d, 53e) du profilé en plastique à calibrer (50) entre dans le canal dans une zone (37a, 37b) distincte respective de la même entrée, de manière spatialement séparée.

12. Procédé selon l'une quelconque des revendications 7 à 11, dans lequel
le profilé en plastique (50) à calibrer présente, à l'état calibré, sur le côté sortie (33), au moins deux éléments complémentaires (51c, 52h, 52c, 52d; 52c, 51h, 51d, 51e; 51h, 51f, 51g, 52g; 52h, 52f, 52g, 51g; 53c, 53h, 53d, 53e), de sorte que l'un, premier, élément complémentaire est une saillie (51c; 52c; 51g; 52g; 53c) comportant une tige et une tête à l'extrémité libre de la tige, la tête présentant, en coupe transversale, un diamètre supérieur à celui de la tige, et que l'autre, deuxième, élément complémentaire est une cavité (51h; 52h; 53h) conçue, à l'état calibré, pour recevoir la tête et limitée par deux éléments de paroi latéraux (52c, 52d; 51d, 51e; 51f, 51g; 52f, 52g; 53d, 53e), de préférence sous forme de saillies, de sorte que l'ouverture de la cavité présente, en coupe transversale, un diamètre supérieur à celui de la tige mais inférieur à celui de la tête du premier élément complémentaire, établissant ainsi un ajustement de forme de la cavité avec la tête en coupe transversale entourant la tête dans deux directions opposées, établissant ainsi un ajustement de forme en coupe transversale entourant la tête dans deux directions opposées, et lors du déplacement à travers ledit au moins un canal (34, 35, 36; 37, 37a, 37b, 37c), les sections du fil de profilé en plastique extrudé formant la saillie (51c; 52c; 51g; 52g; 53c) et la cavité (51h; 52h; 53h) sont progressivement rapprochées (Q1, Q2, Q3) l'une de l'autre dans la direction de déplacement (F), puis réunies (Q4), la saillie (51c; 52c; 51g; 52g; 53c) étant ainsi enfoncée dans la cavité (51h; 52h; 53h) sous déformation plastique et/ou élastique de la tête et/ou des éléments de paroi latéraux (52c, 52d; 51d, 51e; 51f, 51g; 52f, 52g; 53d, 53e).

13. Profilé en plastique (50) calibré, s'étendant dans une direction longitudinale et présentant, perpendiculairement à cette direction, une forme de section transversale comprenant deux fils de profilé en plastique (51, 52) calibrés séparés et quatre éléments complémentaires (51c, 52h, 52d, 52e; 52c, 51h, 51d, 51e; 51h, 51f, 51g, 52g; 52h, 52f, 52g, 51g), dont deux à chaque fois forment respectivement un ajustement de forme en coupe transversale, dans lequel
un premier élément complémentaire est formé sur un premier fil de profilé en plastique (51) des deux fils de profilé en plastique séparés sous la forme d'une première saillie (51c; 51g) comportant une tige (51s) et une tête (51k) à l'extrémité libre de la tige, la tête (51k) ayant, en coupe transversale, un diamètre (51kd) supérieur à celui de la tige (51sd),
un deuxième élément complémentaire est formé sur un deuxième fil de profilé en plastique (52) des deux fils de profilé en plastique séparés sous la forme d'une première cavité (52h), conçue, à l'état calibré, pour recevoir la tête (51k) de la première saillie et limitée par deux éléments de paroi latéraux (52d, 52e; 52f, 52g) de telle sorte que l'ouverture de la première cavité (52h) présente, en coupe transversale, un diamètre supérieur au diamètre (51sd) de la tige (51s) mais inférieur au diamètre de la tête (51k) de la première saillie (51c; 51g), établissant ainsi un ajustement de forme de la cavité avec la tête entourant la tête en coupe transversale dans deux directions opposées, de manière à relier les deux fils de profilé en plastique (51, 52) séparés en un profilé en plastique par ajustement de forme,
un troisième élément complémentaire est formé sur le deuxième fil de profilé en plastique (52) sous la forme d'une deuxième saillie (52c; 52g) comportant une tige et une tête à l'extrémité libre de la tige, la tête ayant, en coupe transversale, un diamètre supérieur à celui de la tige,
un quatrième élément complémentaire est formé sur le premier fil de profilé en plastique (51) sous la forme d'une deuxième cavité (51h), conçue, à l'état calibré, pour recevoir la tête de la deuxième saillie (52c; 52g) et limitée par deux éléments de paroi latéraux (51d, 51e; 51f, 51g) de telle sorte que l'ouverture (51o) de la deuxième cavité (51h) présente, en coupe transversale, un diamètre (51od) supérieur au diamètre de la tige mais inférieur au diamètre de la tête de la deuxième saillie (52c; 52g), établissant ainsi un ajustement de forme entourant la tête en coupe transversale dans deux directions opposées, de manière à relier les deux fils de profilé en plastique (51, 52) séparés en un profilé en plastique par ajustement de forme,
où les saillies (51c; 52c; 51g; 52g) et les cavités (51h; 52h) sont conçues de telle sorte que les deux fils de profilé en plastique (51, 52) calibrés séparés sont déplaçables l'un par rapport à l'autre dans la direction longitudinale à température ambiante,
**caractérisé**
**en ce que** pour la première saillie (51c; 51g), la tête (51k) présente, en coupe transversale, un diamètre (51kd) au moins 2 fois supérieur à un diamètre (51sd) de la tige (51s),
**en ce que** pour la première cavité (52h), l'ouverture présente, en coupe transversale, un diamètre supérieur de 5 % à 50 % au diamètre (51sd) de la tige (51s) de la première saillie,
**en ce que** pour la deuxième saillie (52c; 52g), la tête (52k) présente, en coupe transversale, un diamètre (52kd) au moins 2 fois supérieur à un diamètre (52sd) de la tige (52s),
**en ce que** pour la deuxième cavité (51h), l'ouverture présente, en coupe transversale, un diamètre supérieur de 5 % à 50 % au diamètre (52sd) de la tige (52s) de la deuxième saillie,
**en ce que** l'ajustement de forme des quatre éléments complémentaires (51c, 52h, 52d, 52e; 52c, 51h, 51d, 51e; 51h, 51f, 51g, 52g; 52h, 52f, 52g, 51g) ne peut être rompu à température ambiante par l'application d'une force dans n'importe quelle direction perpendiculaire à la direction longitudinale, lorsque cette force est inférieure ou égale à 300 N par 2 cm de longueur du profilé en plastique (50).

14. Profilé en plastique (50) calibré selon la revendication 13, dans lequel
la première saillie (51g) forme l'un des deux éléments de paroi latéraux (51f, 51g) qui limitent la deuxième cavité (51h), et la deuxième saillie (52g) forme l'un des deux éléments de paroi latéraux (52f, 52g) qui limitent la première cavité (52h).

15. Profilé en plastique calibré (50) selon la revendication 13 ou 14, dans lequel
le profilé en plastique calibré est constitué de polyamide renforcé de fibres de verre, et l'ajustement de forme des quatre éléments complémentaires (51g, 52h, 52f, 52g; 51h, 51f, 51g, 52g) ne peut être rompu à température ambiante par l'application d'une force dans n'importe quelle direction perpendiculaire à la direction longitudinale, lorsque cette force est inférieure ou égale à 500 N par 2 cm de longueur du profilé en plastique (50).
